(19) Europäisches Patentamt / European Patent Office / Office européen des brevets

(11) **EP 4 560 323 A1**

(12) **EUROPEAN PATENT APPLICATION**

(43) Date of publication:
**28.05.2025 Bulletin 2025/22**

(51) International Patent Classification (IPC):
***G01Q 20/02*** (2010.01)

(21) Application number: **24163540.8**

(52) Cooperative Patent Classification (CPC):
**G01Q 20/02**

(22) Date of filing: **14.03.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 US 202363602025 P**

(71) Applicant: **Oxford Instruments Nanotechnology Tools Limited**
**Abingdon, Oxon OX13 5QX (GB)**

(72) Inventor: **PROKSCH, Roger**
**Santa Barbara, CA 93117 (US)**

(74) Representative: **Gill Jennings & Every LLP**
**The Broadgate Tower**
**20 Primrose Street**
**London EC2A 2ES (GB)**

(54) **ACCURATE VECTOR NANO-ELECTROMECHANICS**

(57) A method for operating a scanning probe microscope is provided. The method comprises the following steps: (i) positioning a first measurement spot on the surface of the cantilever at a first location offset from the null point; (ii) measuring the cantilever motion at the first location whilst the tip interacts with the sample; (iii) positioning a second measurement spot on the surface of the cantilever at a second location offset from the null point and the first location; (iv) measuring the cantilever motion at the second location whilst the tip interacts with the sample; and (v) calculating one or more components of the cantilever motion based on the relative positions of each of the first and second locations to the null point and the measurements at the first and second locations from steps (ii) and (iv).

Figure 2

Description

**FIELD OF THE INVENTION**

The invention relates to the operation of a scanning probe microscope (SPM), such as an atomic force microscope (AFM).

**REFERENCES**

US Patents

6643025

7441447

8261602

6643025

7441447

8261602

Non-patent references

Munz, J. Phys. D: Appl. Phys. 43 (2010) 063001.

Asay D B and Kim S H 2006 Rev. Sci. Instrum. 77 043903

N. Balke, S. Jesse, P. Yu, B. Carmichael, S. V. Kalinin and A. Tselev, arXiv preprint arXiv: 1603.07203 (2016).

G. Binnig, C. F. Quate and C. Gerber, Physical review letters 56 (9), 930 (1986).

G. Meyer and N. M. Amer, Applied Physics Letters 57 (20), 2089-2091 (1990).

R. Erlandsson, G. Hadziioannou, C. M. Mate, G. M. McClelland and S. Chiang, The Journal of Chemical Physics 89 (8), 5190-5193 (1988).

Y. Martin, C. C. Williams and H. K. Wickramasinghe, Journal of Applied Physics 61 (10), 4723-4729 (1987).

D. Royer, E. Dieulesaint and Y. Martin, Ieee Transactions on Ultrasonics Ferroelectrics and Frequency Control 33 (1), 109-109 (1986).

R. Erlandsson, G. M. McClelland, C. M. Mate and S. Chiang, Journal of Vacuum Science & Technology a-Vacuum Surfaces and Films 6 (2), 266-270 (1988).

D. Rugar, H. J. Mamin, R. Erlandsson, J. E. Stern and B. D. Terris, Review of Scientific Instruments 59 (11), 2337-2340 (1988).

S. Watanabe, K. Hane and T. Goto, Journal of Vacuum Science & Technology B 10 (1), 1-5 (1992).

M. Hoummady, E. Farnault, T. Yahiro and H. Kawakatsu, Journal of Vacuum Science & Technology B 15 (4), 1539-1542 (1997).

C. M. Mate, G. M. McClelland, R. Erlandsson and S. Chiang, Physical Review Letters 59 (17), 1942-1945 (1987).

M. Radmacher, R. W. Tillmann, M. Fritz and H. E. Gaub, Science 257 (5078), 1900-1905 (1992).

E. Liu, B. Blanpain and J. P. Celis, Wear 192 (1-2), 141-150 (1996).

G. Bogdanovic, A. Meurk and M. W. Rutland, Colloids and Surfaces B-Biointerfaces 19 (4), 397-405 (2000).

S. Ecke, R. Raiteri, E. Bonaccurso, C. Reiner, H. J. Deiseroth and H. J. Butt, Review of Scientific Instruments 72 (11), 4164-4170 (2001).

A. Feiler, P. Attard and I. Larson, Review of Scientific Instruments 71 (7), 2746-2750 (2000).

R. J. Cannara, M. Eglin and R. W. Carpick, Review of Scientific Instruments 77 (5) (2006).

R. W. Carpick and M. Salmeron, Chemical Reviews 97 (4), 1163-1194 (1997).

S. Biggs, R. Cain and N. W. Page, Journal of Colloid and Interface Science 232 (1), 133-140 (2000).

M. A. Lantz, S. J. Oshea, A. C. F. Hoole and M. E. Welland, Applied Physics Letters 70 (8), 970-972 (1997).

J. L. Hazel and V. V. Tsukruk, Journal of Tribology-Transactions of the Asme 120 (4), 814-819 (1998).

C. P. Green, H. Lioe, J. P. Cleveland, R. Proksch, P. Mulvaney and J. E. Sader, Review of Scientific Instruments 75 (6), 1988-1996 (2004).

D. F. Ogletree, R. W. Carpick and M. Salmeron, Review of Scientific Instruments 67 (9), 3298-3306 (1996).

M. Varenberg, I. Etsion and G. Halperin, Review of Scientific Instruments 74 (7), 3362-3367 (2003).

E. Tocha, H. Schonherr and G. J. Vancso, Langmuir 22 (5), 2340-2350 (2006).

D. Choi, W. Hwang and E. Yoon, Journal of Microscopy 228 (2), 190-199 (2007).

K. Voitchovsky, J. J. Kuna, S. A. Contera, E. Tosatti and F. Stellacci, Nature Nanotechnology 5 (6), 401-405 (2010).

G. B. Kaggwa, P. C. Nalam, J. I. Kilpatrick, N. D. Spencer and S. P. Jarvis, Langmuir 28 (16), 6589-6594 (2012).

F. Liu, C. L. Zhao, F. Mugele and D. van den Ende, Nanotechnology 26 (38) (2015).

S. H. Khan, E. L. Kramkowski and P. M. Hoffmann, Langmuir 32 (42), 10802-10807 (2016).

C. Cafolla, W. Foster and K. Voitchovsky, Science Advances 6 (14) (2020).

C. Cafolla and K. Voitchovsky, Nanoscale 12 (27), 14504-14513 (2020).

R. Szoszkiewicz and E. Riedo, Appl. Phys. Lett. 87 (3) (2005).

L. Bocquet and J. L. Barrat, Soft Matter 3 (6), 685-693 (2007).

J. L. Barrat and L. Bocquet, Physical Review Letters 82 (23), 4671-4674 (1999).

J. Baudry, E. Charlaix, A. Tonck and D. Mazuyer, Langmuir 17 (17), 5232-5236 (2001).

L. Bocquet and E. Charlaix, Chemical Society Reviews 39 (3), 1073-1095 (2010).

T. Goddenhenrich, S. Muller and C. Heiden, Review of Scientific Instruments 65 (9), 2870-2873 (1994).

A. D. L. Humphris, B. Zhao, D. Catto, J. P. Howard-Knight, P. Kohli and J. K. Hobbs, Review of Scientific Instruments 82 (4) (2011).

K. Franke, Ferroelectrics Letters Section 19 (1-2), 35-43 (1995).

A. Labuda and R. Proksch, Appl. Phys. Lett. 106 (25), 253103 (2015).

O. Paull, C. Xu, X. Cheng, Y. Zhang, B. Xu, K. P. Kelley, A. de Marco, R. K. Vasudevan, L. Bellaiche, V. Nagarajan and D. Sando, Nature Materials (2021).

L. Fumagalli, G. Ferrari, M. Sampietro and G. Gomila, Appl. Phys. Lett. 91 (24) (2007).

L. Fumagalli, A. Esfandiar, R. Fabregas, S. Hu, P. Ares, A. Janardanan, Q. Yang, B. Radha, T. Taniguchi, K. Watanabe, G. Gomila, K. S. Novoselov and A. K. Geim, Science 360 (6395), 1339-+ (2018).

G. Gramse, I. Casuso, J. Toset, L. Fumagalli and G. Gomila, Nanotechnology 20 (39) (2009).

G. Gramse, G. Gomila and L. Fumagalli, Nanotechnology 23 (20) (2012).

D. C. Hurley, K. Shen, N. M. Jennett and J. A. Turner, Journal of Applied Physics 94 (4), 2347-2354 (2003).

Gerhard Meyer and Nabil M. Amer, Applied Physics Letters 57 (20), 2089 (1990).

M. Hoummady, E. Farnault, T. Yahiro, and H. Kawakatsu, Journal of Vacuum Science & Technology B 15 (4), 1539 (1997).

9 A. D. L. Humphris, B. Zhao, D. Catto, J. P. Howard-Knight, P. Kohli, and J. K. Hobbs, Review of Scientific Instruments 82 (4) (2011).

B. W. Hoogenboom, Pltm Frederix, D. Fotiadis, H. J. Hug, and A. Engel, Nanotechnology 19 (38) (2008).

C. Schonenberger and S. F. Alvarado, Review of Scientific Instruments 60 (10), 3131 (1989).

T. E. Schaffer and P. K. Hansma, Journal of Applied Physics 84 (9), 4661 (1998).

T. E. Schaffer and H. Fuchs, Journal of Applied Physics 97 (8) (2005).

T. Fukuma, M. Kimura, K. Kobayashi, K. Matsushige, and H. Yamada, Review of Scientific Instruments 76 (5) (2005).

F. Johann, T. Jungk, S. Lisinski, A. Hoffmann, L. Ratke, and E. Soergel, Applied Physics Letters 95 (20) (2009).

R. Nath, S. Hong, J. A. Klug, A. Imre, M. J. Bedzyk, R. S. Katiyar, and O. Auciello, Applied Physics Letters 96 (16) (2010).

D. O. Alikin, A. S. Abramov, M. S. Kosobokov, L. V. Gimadeeva, K. N. Romanyuk, V. Slabov, V. Y. Shur, and A. L. Kholkin, Ferroelectrics 559 (1), 15 (2020).

D. O. Alikin, L. V. Gimadeeva, A. V. Ankudinov, Q. Hu, V. Y. Shur, and A. L. Kholkin, Applied Surface Science 543 (2021).

S. V. Kalinin, E. A. Eliseev, and A. N. Morozovska, Applied Physics Letters 88 (23) (2006).

D. C. Hurley, K. Shen, N. M. Jennett, and J. A. Turner, Journal of Applied Physics 94 (4), 2347 (2003).

D. E. Oates, S. H. Park, and G. Koren, Phys. Rev. Lett. 93, 197001 (2004).

"Compensation of cross talk in the optical lever deflection method used in atomic force microscope and Hoffmann Á, Jungk T and Soergel E 2007 Rev. Sci. Instrum. 78 016101

Stowe, T. D.; Yasumura, K.; Kenny, T. W.; Botkin, D.; Wago, K.; Rugar, D. Appl. Phys. Lett. 1997, 71, 288. doi:10.1063/1.119522

**BACKGROUND OF THE INVENTION**

[AFM Intro] The atomic force microscope (AFM) because its combination of high resolution, environmental versatility and myriad combined measurement modalities has become a mainstay in nano-science and technology. Typically, AFMs are based around a flexible micromachined cantilever 1000 with a sharp tip at the end 1020 or 1030 that interacts with a sample 1500. Details of AFMs are well-known in the art and are described in numerous other places including US patents 9841436.

Most AFM measurements only measure one strain component of the 3D tip motion vector. This component is typically the vertical deflection component, $\delta z$, of the cantilever away from its equilibrium position. The force can then be estimated from the deflection observable through Hooke's law, $F_z = k_z \delta_z$, where $k_z$ is the spring constant of the cantilever at the tip location and $\delta_z$ is the displacement of the tip.

The first AFM used a tunnelling detector. Shortly following that, a number of optical interferometric detection methods were demonstrated. In 1986, Martin and Wickramasinghe demonstrated an AFM that used a sensitive heterodyne laser interferometer. They reported high frequency noise baselines of $\sim 10\, fm/\sqrt{Hz}$. This performance was quoted at "AC" frequencies, presumably well above 10kHz, although limit is not quoted in that paper. This heterodyne interferometer was sensitive to optical path length fluctuations and therefore was not suited for low noise, low-frequency measurements. To some degree, this is also the case for more modern heterodyne detectors such as the laser doppler vibrometer used in the commercially available Cypher IDS system from Oxford Instruments. There have been a number of other interferometric detection schemes used in AFM, including a Michelson interferometer reported by Erlandsson et al. in 1987. In 1988, a notable improvement was made by Rugar et al., where the stability against low frequency fluctuations was improved by using a fiber coupled interferometer with a very small optical cavity. While the Rugar had excellent noise performance (need number here) because it was a single phase interferometer, the dynamic measurement range was a fraction of the wavelength of light. More recently, this concept was developed further with fabry-perot interferometer, where the finesse of the optical cavity improved the noise floor to ~1 fm/rtHz. While this is an impressive noise floor, it came at the cost of an extremely limited dynamic range. Although Hoogenboom et al. do not explicitly mention the dynamic range, the maximum amplitude reported in their paper was 1 nm. A year after Rugar's fiber intereferometer, Shonenberger and Alvarado reported a quadrature phase, differential interferometer. Because this was a differential measurement, where the two measurement locations were the base and the vibrating end of the cantilever, common mode low frequency noise was dramatically reduced, allowing a remarkable $\sim 10\, fm/\sqrt{Hz}$ noise floor. In contrast to the single phase lockins, the detection of quadrature components also means that it was not necessary to operate at a limited range of cavity dimensions and that the dynamic range of the cantilever many microns or more. While this differential approach was used by a few other groups, it has not been widely adopted, presumably because of the complexity of the optical design, stability of the beam splitting optics and, much more significantly because of the relatively easy to construct and implement optical beam detector (OBD) that was introduced in 1990.

The OBD solution provided a relatively inexpensive, low-noise detection method that has since become nearly ubiquitous in the AFM field, with most commercial AFMs based around it. The OBD method is the most commonly used technique for cantilever-deflection measurements. In this method, laser light emitted from a solid-state diode is directed onto the back of the cantilever and then detected by a position-sensitive detector (PSD), which consists of two closely spaced photodiodes. The output signal from these photodiodes is collected by a differential amplifier.

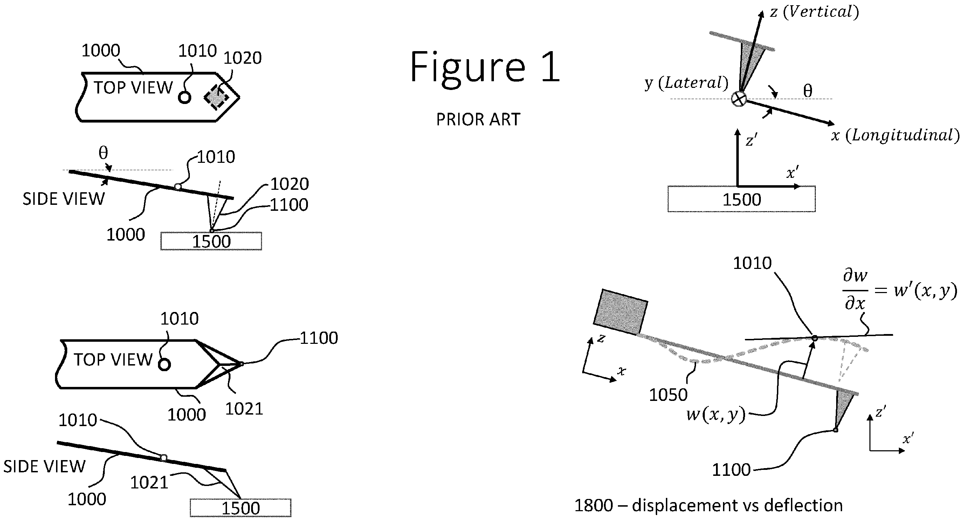

When the cantilever undergoes angular displacement, one of the photodiodes collects more light than the other, leading to the generation of an output signal. This output signal, which is obtained by calculating the difference between the photodiode signals normalized by their sum, is directly proportional to the deflection of the cantilever. This means that the OBD detector measures the slope $\frac{\partial w}{\partial x} = w'(x,\ y)$, rather than the displacement $w(x, y)$ at the measurement position. This is illustrated in Figure 1 1800, where a cantilever 1000 has a position-dependent displacement 1050 at the spot measurement position 1010 $w(x,$ y) and an associated deflection $w'(x, y)$.

The OBD development allowed an independent measure of torsional bending $\frac{\partial w}{\partial y}$, of the cantilever beam simultaneously with the normal deflection, allowing techniques such as lateral force microscopy (LFM). LFM measurements have allowed measurements of frictional forces in a variety of materials. LFM measurements are recognized to be subject to high levels of uncertainty associated with difficulties in calibrating both the lateral measurement sensitivity and the lateral stiffness. In the AFM cantilevers are often relatively compliant along the z-axis and less compliant along different axes.

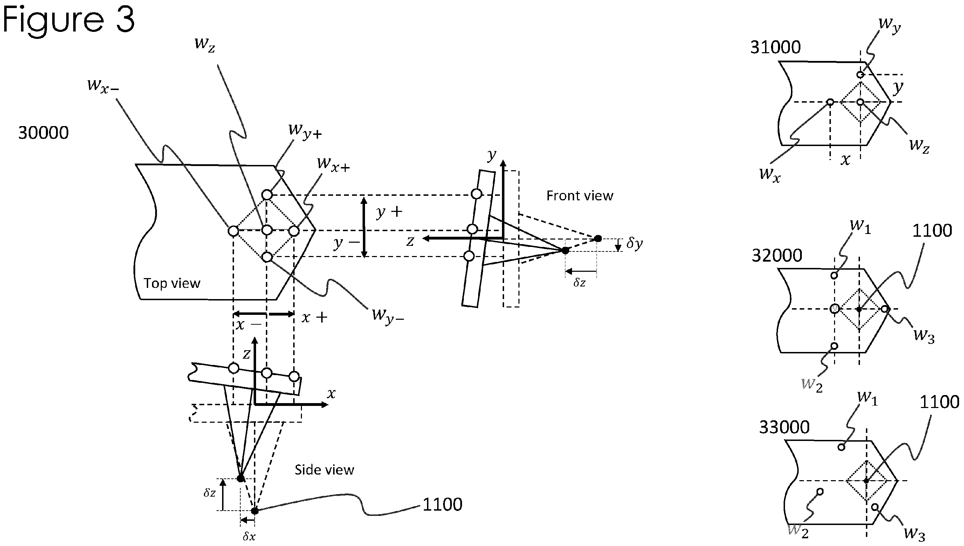

LFM, invented in 1987, also known as Friction Force Microscopy (FFM), has gained increasing applications over the years. It is used for mapping surface properties in various materials like polymers, thin films, and lithographically patterned surfaces. LFM can differentiate chemical groups by measuring force interactions with chemically functionalized tips, making it a form of Chemical Force Microscopy (CFM). It is often performed by measuring force-distance curves (FDCs) and is closely related to adhesion force values. One issue with OBD detection approaches is that the alignment of the quadrant detector is not aligned with the reflected optical beam axes. To accurately attribute measured signals to their respective driving forces, it is essential to achieve crosstalk-free detection of both vertical and lateral signals. Often, with OBD microscopes, these two signals are not completely separated due to a misalignment between the plane of the laser beam used for readout and the orientation of the position-sensitive detector. A nice example of this misalignment is illustrated in Figure 3 of Munz, J. Phys. D: Appl. Phys. 43 (2010) 063001.

To address this issue, a setup involving a shear piezo can be utilized to make adjustments, while the tip is in contact with the sample. Correcting for this crosstalk has been discussed in "Compensation of cross talk in the optical lever deflection method used in atomic force microscope and Hoffmann Á, Jungk T and Soergel E 2007 Rev. Sci. Instrum. 78 016101. These methods are somewhat cumbersome and have not been generally adapted despite the importance of clearly separating these signals. Researchers have analyzed optical crosstalk by observing changes in friction loops with sample height and found that misalignment factors can vary significantly with changes in the reflection point on the cantilever. In tip-scanning AFMs, meaning AFMs where the cantilever, rather than the sample is moved to produce relative motion between the tip and sample, crosstalk can occur even with an undeformed cantilever if the tip scanning system axes are not properly aligned with the optical detector axes.

Correction of PSD signals in real-time is challenging for most commercial AFM systems, but data processing schemes and analysis methods have been proposed to quantify and adjust crosstalk. One approach involves affine transformations applied to measured voltages. Another method models the entire detection system, allowing for parametric simulations to study the effects of misalignments in the optical beam path and quantify crosstalk coefficients more effectively. These methods typically require laborious testing or involve signal processing that can add noise and other undesirable characteristics to the signal. Furthermore, this correction process typically needs to be repeated each time a new cantilever is used and possibly even if the spot position changes locations on the back of the same cantilever (see for example Asay D B and Kim S H 2006 Rev. Sci. Instrum. 77 043903).

While it's highly likely that there is some degree of mechanical crosstalk in most cantilever setups, its measurement and quantification have often been overlooked. Finally, it should be noted that the same arguments apply for vertical measurements. If there is crosstalk of the lateral motion into the vertical OBD signal, it will lead to uncontrolled errors in the vertical measurements. By mitigating the effects of crosstalk, it becomes possible to reduce discrepancies in data obtained from different experimental setups, where the measurement data becomes less reliant on the specific characteristics of the instrument, cantilever choice and other experimental variations, leading to more consistent and reliable results across different laboratories.

There are a number of more exhaustive descriptions in the literature, discussing LFM/frictional calibration approaches. for example, J. Phys. D 43 063001 (2010).

Another important consideration common to almost all AFMs is that the reference frame of the cantilever rarely matches the reference frame of the sample. In general, because of practical design considerations, the cantilever is usually slightly tilted with respect to the sample surface (see Figure 1). Sample roughness, surface structures add to the complexity implies that the tip-sample force is rarely, if ever, parallel to the z-axis of the cantilever. Figure 1 shows a representation of prior art cantilevers 1000. For optical detection AFMs, a light is focused on a spot 1010 on the top of the cantilever, the reflected light is then used to estimate the motion of the tip. The tip is generally located underneath the top surface 1020 or, in some cases, is visible from the top 1021. In general, the body of the cantilever makes a small angle with the surface of the sample $\theta$.

That said, it can be useful to consider the cantilever parallel to the sample in some situations since it can greatly simplify the analyses.

**[PFM as a 3D vector sample]**

In the following, we use piezoresponse force microscopy (PFM) as a representative technique for demonstrating the capabilities of interferometric vector AFM. PFM is one of the most widely used techniques to study piezoelectric and ferroelectric properties. It boasts high spatial resolution and sensitivity. In PFM, the local electromechanical response is measured by applying a modulated potential to the cantilever tip and then measuring the mechanical response at the same frequency. The simplistic view is that cantilever oscillations are due to the converse piezoelectric effect.

Since this technique was pioneered in 1996, it has been used to study a wide array nanoscale piezo- and ferro-electric materials in addition to other materials with electromechanical coupling. Inevitably, there have been some surprises along the way, most notably a number of "strange" seemingly piezoelectric results using PFM for materials that should not be piezoelectric. At the same time, there has been a trend towards studies of systems with thinner and smaller features and on materials with weaker converse piezoelectricity. These weaker piezoelectrics are more susceptible to background effects such as long range electrostatics and other types of crosstalk effects including topographic and electrical.

A feature of the piezo response in materials is that they have a three-dimensional response to an applied electric field. This response in turn causes three dimensional translations of the tip. Rodriguez and Kalinin et al pointed out that the longitudinal tip displacement sensitivity might be comparable or even more sensitive than normal displacements. They also hypothesized that a significant difference between normal and longitudinal measurements could be explained by the inset of frictional sliding. By rotating the sample underneath the cantilever probe, referred to as angle-resolved PFM (AR-PFM) insight into the in-plane ferroelectric components. AR-PFM can both provide a vector map of the sample response and serve as a detector for the existence of measurable longitudinal forces. A significant downside is that it requires alignment of the tip and sample at each new angle and, practically, drift and distortion correction of the images. While results of this approach have been promising, it is tedious and subject to error because of the large number of images required.

The force acting on the tip is in general a three-dimensional vector with coordinates designated as x, y and z, in the reference frame of the cantilever. The cantilever response to forces acting on the tip depends on a variety of factors including the excitation frequency, details of the cantilever shape and dimensions and other factors known in the art.

It is convenient to have a frame of reference for the sample (x', y' and z'). These two reference frames are tilted with respect to each other by the angle $\theta$. In most applications, force measurements are made in the z-direction (in the reference frame of the cantilever). This axis of the cantilever is typically the "soft" axis, meaning that is the axis with the smallest stiffness or spring constant. The stiffness of the sensor along different directions (kx, ky and kz) are usually quite different. Since the forces on the apex of the tip are typically 3D, there will be movement of the apex in response to those forces given by $\delta i = F_i/k_i$, where $i = x, y$ or $z$.

To date, most OBD PFM measurements assume motion is restricted to the component normal to the sample surface. This has proven sufficient for a large number of applications, where the "z" motion of the cantilever has been used to measure forces and displacements, to create feedback images utilizing low frequency, sub-resonant and resonating and multifrequency techniques.

In 2015 (Labuda and Proksch), we demonstrated that interferometric detection allowed the motion of the tip of an AFM cantilever to be directly probed. In particular, they were able to demonstrate that the effects of electrostatic interactions between the body of the cantilever and a charged sample surface could be separated from the localized strain under the tip, allowing better quantification of the inverse piezoelectric coefficient. This approach has been successfully used to better identify the origins of electromechanical response in in a variety of emerging materials.

In summary, an ideal calibration method should offer high accuracy, traceability to SI units, and the ability to quantify and remove crosstalk. To ensure broad adoption, it should also be compatible with commercial deployment, user-friendly, and applicable to a wide range of cantilever shapes and lateral force magnitudes. While various methods for calibrating lateral forces have been demonstrated, there is still a need for further research to achieve the required levels of accuracy, ensure alignment with general metrological standards, establish acceptance within the microscopy community and related user groups, and cover the entire spectrum of forces, ranging from the piconewton to the micronewton scale.

## SUMMARY OF INVENTION

As discussed above, the cantilever in an AFM is an extended, dynamic mechanical object. It responds to forces by moving in a manner that is determined by both the frequency and location of the driving forces, as well as the construction and material properties of the cantilever itself. For example, the cantilever will deflect in a relatively simple manner to forces applied at the tip and that are normal to the long axis of the cantilever.

The tip of the AFM probe can move in three dimensions. AFM OBD detectors are commonly assumed to measure only the vertical deflection component, $\delta z$, of the cantilever away from its equilibrium position is measured; however, the longitudinal component $\delta x$ can also contribute to the signal. In other cases, because of, among other factors, misalignment of the OBD detector axis to the cantilever, the lateral component $\delta y$ can also contribute to the OBD signal an uncontrolled manner.

Measurements of this motion are the way that atomic force microscopes determine the forces acting between the tip of the cantilever and the sample being studied. Because these forces are three-dimensional and can vary considerably in frequency and magnitude, the cantilever dynamics and motion must be well understood to correctly interpret the tip sample forces. In addition, there are non-localized forces acting between the sample and the body of the cantilever. These can include long range electrical forces, or viscous damping forces from the atmosphere surrounding the cantilever.

The present invention describes a method of determining the trajectory of the tip of a mechanical probe in more than one dimension, preferably three. For example, prior art measurements teach placing the detection spot directly over the probe tip to measure the vertical motion of the tip; in this case we show that by placing it in other positions, highly accurate measurements of the vertical and other movement components can be made.

## Aspects of the invention

A first aspect of the invention provides a method for operating a scanning probe microscope. The scanning probe microscope comprises: a probe having a cantilever with a tip, wherein the cantilever comprises a null point on a surface of the cantilever; a sample and a sample holder arranged to hold the sample for measurement using the tip of the cantilever; a light source arranged to emit one or more beams of light onto the surface of the cantilever, each beam forming a measurement spot on the surface of the cantilever; an optical assembly configured to adjust the position of each measurement spot on the surface of the cantilever; and a photodetector assembly for measuring light reflected from the surface of the cantilever to measure motion of the cantilever from light reflected from each measurement spot. The method comprises the following steps: (i) positioning a first measurement spot on the surface of the cantilever at a first location offset from the null point; (ii) measuring the cantilever motion at the first location whilst the tip interacts with the sample; (iii) positioning a second measurement spot on the surface of the cantilever at a second location offset from the null point and the first location; (iv) measuring the cantilever motion at the second location whilst the tip interacts with the sample; and (v) calculating one or more components of the cantilever motion based on the relative positions of each of the first and second locations to the null point and the measurements at the first and second locations from steps (ii) and (iv).

Typically, when the tip interacts with the sample, forces act on the tip in all directions, impacting the resulting cantilever motion. This method advantageously enables the components of the cantilever motion to be calculated separately. The components are typically the vector components of the forces acting in different directions. This beneficially provides additional information in relation to the cantilever dynamics when the tip is interacting with the sample.

The null point is a location on the cantilever at which the cantilever motion is only affected by vertical forces. The first and second locations are on the surface of the cantilever and are offset from the null point on the surface of the cantilever. There may be more than one null point on the cantilever, in which case the first and second locations are both offset from each of the null points. At the first and second locations, the cantilever motion is affected by vertical forces, and is also affected by lateral and longitudinal forces, i.e. forces in the plane of the sample, perpendicular to the vertical forces. Therefore, each of the measurement steps (ii) and (iv) of the method return a combination of components. The first and second locations are also offset from each other, which beneficially provides two different measurements of the cantilever motion which can be combined in step (v) to calculate one or more components of the cantilever motion.

Interaction of the tip with the sample typically involves moving the tip towards the sample to increase the interaction force with the sample. Preferably, the scanning probe microscope further comprises an actuator assembly configured to move the cantilever relative to the sample holder. Typically, the actuator assembly is configured to modulate the separation between the tip and the sample along the optical axis of the light source or along an axis nearly parallel to this axis to account for the tilt of the cantilever. The actuator assembly also moves the tip and sample relative to each other along directions perpendicular to that first axis in order to measure different points on the sample surface. This same actuator assembly can optionally change the relative position of the cantilever and the light source and/or the optical assembly and/or the photodetector assembly.

References to "each" beam and "each" measurement spot above should not be taken to mean that a plurality of such beams and spots must be present. Rather, these are references to individual ones of the one or more beams and each of the one or more measurement spots (respectively), mentioned previously. Therefore, when the light source is arranged to emit (only) one beam of light onto the surface of the cantilever, that beam forms a (single) measurement spot on the surface of the cantilever; and the position of that measurement spot can be adjusted; and the photodetector assembly is for measuring light reflected from that measurement spot to measure motion of the cantilever. However, as discussed below, the use of plural beams and respective measurement spots are preferred in some implementations.

The light source preferably has a single optical axis orientated towards the cantilever. Preferably the optical axis (or axes) of the one or more beams emitted by the light source will be substantially parallel to the optical axis of the light source (and therefore also substantially parallel to one another where there are multiple beams).

Optionally, the scanning probe microscope further comprises an actuator assembly configured to adjust the separation between the tip and the sample along the optical axis of the light source. The actuator assembly can thus be used to modulate the interaction between the tip and the sample. Scanning probe microscopes may be used in different scanning modes, for example "tapping mode" and "contact mode".

In tapping mode, the actuator assembly may be configured to drive the cantilever at a driving frequency, thereby modulating the separation between the tip and the sample. The cantilever motion is typically affected by the interaction between the tip and the sample whilst modulating the separation between the tip and the sample.

Alternatively, in contact mode, the actuator assembly may be configured to bring the tip towards the sample to engage with the sample and raise the tip away from the sample to disengage with the sample. The actuator assembly can be used to modify the interaction between the tip and the sample by lowering or raising the tip relative to the sample to increase or decrease the interaction force respectively.

The cantilever motion is typically affected by the interaction between the tip and the sample whilst modifying the interaction force between the tip and the sample. Optionally, in contact mode, the separation between the tip and the sample may become negative when the interaction force is increased. A negative separation means that a portion of the tip is positioned below the upper surface of the original, unperturbed, surface.

Preferably, each of the one or more components calculated in step (v) is parallel to the optical axis of the light source or perpendicular to the optical axis of the light source.

This means that each component of the one or more components calculated in step (v) is either parallel or perpendicular to the optical axis of the light source. In examples in which two or more components are calculated in step (v), the two or more components optionally comprise at least one parallel component and at least one perpendicular component.

Advantageously this can be used to calculate the pure cantilever displacement (i.e. vertical motion of the cantilever) as well as components of the cantilever motion perpendicular to the vertical motion. Perpendicular components of the cantilever motion may be referred to as lateral and longitudinal components of the cantilever motion, which are typically in the plane of the sample.

Preferably, at least one of the one or more components calculated in step (v) is perpendicular to the optical axis of the light source and is aligned either with a major axis of the cantilever or a minor axis of the cantilever, wherein the minor axis is perpendicular to the major axis along the surface of the cantilever.

Typically, the cantilever may be substantially planar having a major axis and a minor axis in the plane comprising the surface of the cantilever. The cantilever preferably has a supported end and a free end. The supported end is typically supported by the probe and the tip is typically arranged at the free end, distal from the supported end. Preferably, the major axis is an axial direction extending between the free end and the supported end of the cantilever, which may be perpendicular to an edge of the probe. Most preferably, the cantilever is symmetrical about the major axis. Also preferably, there is a null point located on the major axis. Preferably, the minor axis is orthogonal to the major axis in the plane of the surface of the cantilever. Most preferably, there is a null point located substantially where the major and minor axes intersect one another. Most preferably, the major and minor axes intersect one another substantially in line with the tip. Optionally, for elongate cantilevers, the major axis is preferably parallel to the elongate direction. References to major and minor axes of the cantilever herein refer to these directions.

Advantageously, when a component of the cantilever motion is aligned either with a major axis of the cantilever or a minor axis of the cantilever, the lateral, i.e. torsional, and longitudinal, i.e. bending, components of the cantilever motion can be directly probed. This also beneficially simplifies the calculation in step (v).

Preferably, step (v) may comprise: calculating a first component of the cantilever motion based on the relative positions of each of the first and second locations to the null point and the measurements at the first and second locations from steps (ii) and (iv); and calculating a second component of the cantilever motion based on the relative positions of each of the first and second locations to the null point and the measurements at the first and second locations from steps (ii) and (iv); wherein the second component is perpendicular to the first component.

Optionally, the first component is parallel to the optical axis of the light source and the second component is perpendicular to the optical axis of the light source. Typically, the second component is parallel to a straight line extending between the first and second locations.

Advantageously, this provides information regarding two perpendicular components of cantilever motion to further quantify the cantilever dynamics.

Preferably, the first and second locations are symmetrical around the null point. The symmetry of the first and second locations advantageously simplifies the step of calculating one or more components. For example, the cantilever motion measured at the first and second locations may include corresponding components of substantially equal magnitude and opposite sign: the cantilever motion measured at the first location may include a component in a first direction which is negative and the cantilever motion measured at the second location may include a component in the first direction which is positive and has a substantially equal magnitude.

Optionally, the first location may be offset from the null point in a first direction and the second location may be offset from the null point in a second direction, wherein the second direction is substantially opposite the first direction.

The components of the cantilever motion are typically dependent on the relative position of the location of the measurement spot to the null point. Preferably, the components of the cantilever motion are dependent on the direction of the offset of the location of the measurement spot and the null point. Typically, when the first location is offset from the null point in the first direction and the second location is offset from the null point in the second direction, the components of the cantilever motion measured in steps (ii) or (iv) each comprise a first component parallel to the optical axis of the light source, and a second component perpendicular to the optical axis of the light source. In this case, the second component is typically parallel to the first direction, and thereby also parallel to the second direction.

Typically, in this case, the value of the first component parallel to the optical axis of the light source is the same for the first and second locations, whereas the value of the second component perpendicular to the optical axis of the light source is different for the first and second locations. In this way, the cantilever motion measured in steps (ii) and (iv) may be combined to determine both the value of the first component and the value of the second component. Taking measurements at two different locations can advantageously be used to calculate two, typically perpendicular, components of the cantilever motion.

Optionally, a straight line drawn between the first and second locations may be substantially parallel to a major axis of the cantilever, or a straight line drawn between the first and second locations may be substantially parallel to a minor axis of the cantilever. As described above, the minor axis is perpendicular to the major axis along the surface of the cantilever.

Optionally, the first location may be on the major axis and the second location may be on the minor axis, or the first location may be on the minor axis and the second location may be on the major axis.

Preferably, the first and second locations may each be on the major axis of the cantilever, or the first and second locations may each be on the minor axis of the cantilever.

When the first and second locations are each on the major axis, or the minor axis, of the cantilever, the motion of the cantilever can advantageously be determined about the minor or major axes respectively using measurements from just two locations on the surface of the cantilever.

When the first and second locations are symmetrical about the null point, the first component is typically substantially the same when the cantilever motion is measured at each of the first and second locations. However, whilst the second component typically has substantially the same magnitude when the cantilever motion is measured in each location if the locations are symmetrical about the null point, the sign is typically opposite.

Typically, the cantilever motion may be cantilever displacement or the cantilever motion may be cantilever deflection. Optionally, only cantilever displacement may be measured, or only cantilever deflection may be measured. Alternatively, both cantilever displacement and cantilever deflection may be measured.

Advantageously, when both cantilever displacement and cantilever deflection are measured, more information can be obtained in relation to the cantilever motion for each measurement spot. Furthermore, the additional measurements obtained can be used to verify and cross-check the values of the one or more components calculated in step (v) by over-constraining the fit.

Preferably, when the cantilever motion is cantilever displacement, the cantilever motion is measured using an interferometric displacement sensor. Preferably, when the cantilever motion is cantilever deflection, the cantilever motion is measured using optical beam deflection.

Typically the cantilever is both displaced and deflected when the tip interacts with the sample. The amount of displacement and deflection depends on the tip-sample interaction.

Cantilever displacement provides information regarding the separation between the tip and the sample, measured by monitoring the change in position of the cantilever relative to the surface. The interferometric displacement sensor typically achieves this by measuring a change in distance between the surface of the cantilever and a reference point. Cantilever displacement is typically a distance.

Cantilever deflection provides information regarding the bending of the cantilever. Using optical beam deflection, the bending of the cantilever deflects an optical beam a corresponding amount thereby providing information regarding the angle of deflection.

Optionally, the interferometric displacement sensor may comprise a differential interferometer. A differential interferometer advantageously provides two beams of light, the difference in optical path length of which can be compared. Typically a first beam may be used to form a reference spot and a second beam may be used to form a measurement spot on the surface of the cantilever. The measurement spot can be used as one of the measurement spots in the above-described method (or more than one, in serial acquisition mode). The reference spot may be formed on the surface of the probe supporting the cantilever.

Alternatively, a first beam of the differential interferometer may be used to form a first measurement spot on the surface of the cantilever and a second beam of the differential interferometer may be used to form a second measurement spot on the surface of the cantilever. Advantageously this provides two measurement spots separated by a known distance. The first and second measurement spots can be used as two of the measurement spots simultaneously in the above-described parallel acquisition method. This therefore simplifies the positioning of measurement spots because steps (i) and (iii) can be performed simultaneously using a single interferometer.

Optionally, step (ii) may comprise: (a) measuring the cantilever displacement at the first location whilst the tip interacts with the sample; and (b) measuring the cantilever deflection at the first location whilst the tip interacts with the sample; and/or step (iv) may comprise: (a) measuring the cantilever displacement at the second location whilst the tip interacts with the sample; and (b) measuring the cantilever deflection at the second location whilst the tip interacts with the sample.

Advantageously, measuring both cantilever displacement and cantilever deflection provides more information regarding the cantilever motion. This can be used to obtain more components of the cantilever motion and/or to over-constrain the data in order to verify the value of the components calculated in step (v). For example, measuring both displacement and deflection at step (ii) or step (iv) could be used to calculate three mutually perpendicular components of the cantilever motion. Measuring both displacement and deflection at step (ii) and step (iv) could advantageously be used to provide further measurements, thereby over-constraining the fit when calculating the one or more components.

Over-constraining the fit may comprise calculating a first component of the cantilever motion using a first combination of measurements to obtain a first calculated component of the cantilever motion; and calculating the first component of the cantilever motion using a second combination of measurements to obtain a second calculated component of the cantilever motion. Verifying the calculated components may comprise comparing the first calculated component to the second calculated component. Theoretically, the first and second calculated components are expected to be the same, and therefore any differences between the first and second calculated components can advantageously indicate experimental variations. For example, the tip typically degrades over time and this may result in a difference between the first and second calculated components.

Optionally, the steps (i) to (v) may be performed one after the other, i.e. sequentially. This may be referred to as serial acquisition, in which the steps of the method are typically performed sequentially in order, i.e. step (i), step (ii), step (iii), step (iv), and then step (v). This advantageously means the arrangement of the scanning probe microscope can be simplified.

Alternatively, steps (ii) and (iv) may be performed simultaneously. That is, the method may comprise measuring the cantilever motion at the first and second locations simultaneously whilst the tip interacts with the sample. This may be referred to as parallel acquisition, in which the cantilever motion is measured at the first and second locations at the same time. This is preferably achieved using a light source arranged to emit two beams of light onto the surface of the cantilever. Optionally, this may be achieved using a single light emission device arranged to emit two beams of light, or two light emission devices each arranged to emit one beam of light. The one or more light emission devices form part of the light source.

Advantageously, parallel acquisition is faster than serial acquisition. Parallel acquisition also avoids any errors which might otherwise be introduced by movements of the measurement spot between serial acquisition steps. Furthermore, tip-based effects such as the impact of degradation of the tip due to imaging can be avoided by measuring the cantilever motion at the first and second locations concurrently.

When steps (ii) and (iv) are performed simultaneously, steps (i) and (iii) are preferably performed before steps (ii) and (iv). Steps (i) and (iii) may be performed at different times from each other, or at the same time as each other. Preferably, if the beams forming the first and second measurement spots are linked, for example if they are emitted from the same light emission device, steps (i) and (iii) are preferably performed at the same time. Alternatively, if the beams forming the first and second measurement spots are individually controlled, steps (i) and (iii) can be performed at different times from each other by adjusting the measurement spots one after the other. Step (i) may be performed before or after step (iii). Step (v) is typically performed after steps (ii) and (iv).

Optionally, if step (ii) comprises: (a) measuring the cantilever displacement at the first location whilst the tip interacts with the sample; and (b) measuring the cantilever deflection at the first location whilst the tip interacts with the sample; and/or if step (iv) comprises: (a) measuring the cantilever displacement at the second location whilst the tip interacts with the sample; and (b) measuring the cantilever deflection at the second location whilst the tip interacts with the sample, steps (ii)(a) and (iv)(a) may be performed at the same time as steps (ii)(b) and (iv)(b) or steps (ii)(a) and (iv)(a) may be performed at a different time, either before or after, steps (ii)(b) and (iv)(b). Optionally, steps (ii)(a) and (ii)(b) may be performed using the same beam of light emitted by the light source. Similarly, steps (iv)(a) and (iv)(b) may be performed using the same beam of light emitted by the light source. This advantageously simplifies the SPM arrangement because one beam of light can be used to measure both displacement and deflection of the surface of the cantilever. Alternatively, steps (ii)(a) and (ii)(b) may be performed using separate beams of light. Similarly, steps (iv)(a) and (iv)(b) may be performed using separate beams of light. The separate beams of light can be used to obtain the measurements simultaneously or sequentially as described above.

Preferably, step (v) comprises calculating one or more components of the cantilever motion based on the relative positions of each of the first and second locations to the null point, the height of the tip, and the measurements at the first and second locations from steps (ii) and (iv).

The tip height is typically measured perpendicular to the surface of the cantilever, and can advantageously be used, in combination with the relative positions of each of the first and second locations to the null point, to calculate first and second lever arms respectively. Each lever arm, also known as a gain factor, is the ratio of the distance between the location of the measurement spot and the null point and the height of the tip.

The tip height can be measured in a number of ways. For example, the tip height could be measured using an optical microscope, or an electron microscope, to obtain an image of the tip and measure the height of the tip based on the acquired image.

Optionally, the method may further comprise the following steps: (vi) positioning a third measurement spot on the surface of the cantilever at a third location offset from the null point and the first and second locations; and (vii) measuring the cantilever motion at the third location whilst the tip interacts with the sample. Step (v) may comprise calculating one or more components of the cantilever motion based on the relative positions of each of the first, second and third locations to the null point and the measurements at the first, second and third locations from steps (ii), (iv) and (vii).

Advantageously, this enables additional components of the cantilever motion to be calculated in step (v). For example, three unknowns can be determined by measuring the cantilever motion at three different locations. As above, further constraints may be applied by measuring displacement as well as deflection in one or more of the locations.

Optionally, the method may further comprise the following steps: (viii) positioning a fourth measurement spot on the surface of the cantilever at a fourth location offset from the null point and the first, second and third locations; and (ix) measuring the cantilever motion at the fourth location whilst the tip interacts with the sample. Step (v) may comprise calculating one or more components of the cantilever motion based on the relative positions of each of the first, second, third and fourth locations to the null point and the measurements at the first, second, third and fourth locations from steps (ii), (iv), (vii) and (ix).

Advantageously, this provides additional measurements to over-constrain the fit and to verify the calculated components as described above. The over-constraint of the data can advantageously be used to monitor the time dependence of the measurements. The time-dependence, i.e. the change in the values of cantilever motion measured over time, may be recorded. Optionally, the time-dependence of the measurements may be modelled to determine a corrective factor to be applied to subsequent measurements of the cantilever motion. This advantageously counteracts the time-dependent factors of the cantilever motion, and therefore comparisons between measurements can more accurately be made.

For example, the component of the cantilever motion parallel to the optical axis of the light source can be calculated using the cantilever motion measured in steps (ii) and (iv), and the same component can be calculated using the cantilever motion measured in steps (vii) and (ix). The calculated values can then be compared.

Optionally, the method may further comprise the following steps: (x) positioning a fifth measurement spot on the surface of the cantilever at the null point; and (xi) measuring the cantilever motion at the null point whilst the tip interacts with the sample. Preferably, step (xi) comprises measuring the cantilever displacement at the null point whilst the tip interacts with the sample. Advantageously this provides an additional measurement of the vertical component of the cantilever motion which can be compared against the calculated values in step (v).

For serial acquisition, steps (vi) to (ix) are typically performed sequentially in order, i.e. step (vi), step (vii), step (viii), and step (ix). Optionally, steps (vi) to (ix) may be performed after step (iv), with step (v) being performed last. Alternatively, step (v) may be performed after step (iv) and also after step (ix). Preferably when step (v) is performed after step (iv), step (v) involves calculating one or more components of the cantilever motion based on the relative positions of each of the first and second locations to the null point and the measurements at the first and second locations from steps (ii) and (iv). Preferably, when step (v) is only performed after step (ix), step (v) involves calculating one or more components of the cantilever motion based on the relative positions of each of the first, second, third and fourth locations to the null point and the measurements at the first, second, third and fourth locations from steps (ii), (iv), (vii) and (ix). Typically, when step (v) is performed after step (iv) and after step (ix), after step (ix) step (v) involves calculating one or more components of the cantilever motion based on the relative positions of each of the first, second, third and fourth locations to the null point and the measurements at the first, second, third and fourth locations from steps (vii) and (ix).

For parallel acquisition, steps (vii) and (ix) may be performed simultaneously or at different times with respect to each other. Steps (vii) and (ix) may be performed at the same time as steps (ii) and (iv), or at a different time, before or after steps (ii) and (iv).

Optionally, the one or more components of the cantilever motion in step (v) may comprise first, second and third components, wherein the first, second and third components are mutually perpendicular.

This means that the first and second components may be perpendicular to each other, the second and third components may be perpendicular to each other, and the first and third components may be perpendicular to each other.

Preferably, the first component is parallel to the optical axis of the light source and the second and third components are perpendicular to the optical axis of the light source. Preferably, the second and third components are aligned with the major and minor axes of the cantilever respectively.

Optionally, the third and fourth locations are symmetrical around the null point. The symmetry of the third and fourth locations advantageously simplifies the calculation of one or more components in step (v) as described above in relation to the first and second locations.

Optionally, the third and fourth locations may each be on the major axis of the cantilever, or wherein the third and fourth locations may each be on the minor axis of the cantilever, wherein the minor axis is perpendicular to the major axis along the surface of the cantilever.

When the third and fourth locations are each on the major axis, or the minor axis, of the cantilever, the motion of the cantilever can advantageously be determined about the minor or major axes respectively using measurements from just two locations on the surface of the cantilever, as described above in relation to the first and second locations.

Typically the first and second locations may each be on the major axis and the third and fourth locations may each be on the minor axis, or the first and second locations may each be on the minor axis and the third and fourth locations may each be on the major axis. This arrangement advantageously enables the three components of the cantilever motion to be easily determined, and the vertical component of the cantilever motion to be over-constrained which advantageously enables a cross-check of the calculated components to be performed.

The cantilever may comprise a plurality of null points depending on the mode of oscillation. Preferably, the cantilever comprises a null point which is substantially aligned with the tip along the optical axis of the light source.

The location of the null point can be identified in a number of ways. For example, the null point may be identified based on at least one of the following: user input, a calibration procedure, a value stored in a memory, or image recognition of the surface of the cantilever.

User input may involve a user typing in an identification of the cantilever such as an identification number. Optionally, the null point may be recalled from memory based on the identified cantilever. Optionally, a user may look at the cantilever and select the approximate location of the null point based on user experience. The user may, for example, estimate the location of the null point based on cantilever shape. Optionally, a user may use other equipment to image the tip (which may be the same image used to measure the tip height), and estimate the null point based on the location of the tip, because a null point is preferably substantially aligned with the tip as described above.

Alternatively, the location of the null point may be identified using automated recognition of the tip for example using the camera assembly. In some examples, the location of the null point can be estimated based on cantilever deflection and oscillation amplitude, or other SPM observables.

Optionally, the location of the null point may be estimated using a calibration procedure. For example, the calibration procedure may comprise monitoring the cantilever motion (for example displacement or amplitude) whilst modifying the interaction between the tip and the sample (for example by changing the separation between the tip and the sample or by moving the tip in the plane of the sample). Modifying the interaction between the tip and the sample typically affects the cantilever motion to different extents depending on the location of the measurement spot. In this way, the location of the null point can be estimated based on the variation of the cantilever motion in response to a changing tip-sample interaction.

The method preferably comprises storing the location of the null point, calculating two or more locations to position the measurement spots, and storing the position of each calculated location relative to the null point. Preferably the method further comprises storing the measured tip height. If an image of the tip is taken using an integrated camera assembly as described above, the method may comprise measuring the tip height by reviewing the acquired image, and subsequently storing the measured tip height. Alternatively, if the tip height is measured using separate equipment, the method may comprise storing the value of the tip height input by a user. Advantageously the stored values above can be used in the subsequent calculating steps.

Optionally, the method may comprise executing a computer program to cause the scanning probe microscope to perform each of the steps of the method, or at least some of the steps of the method.

This advantageously facilitates the operation of the scanning probe microscope by a user because the steps can be performed automatically.

Optionally, the steps of the method may be performed in a hybrid manner in which a computer program can be executed to cause the scanning probe microscope to perform some steps of the method, and other steps of the method can be performed manually by a user or using a firmware or hardwired approach. For example, the user could perform steps (i) and (iii) and the computer program could perform steps (ii), (iv) and (v) of the method. Alternatively, following the performance of one or more steps of the method by the computer program, the user may provide confirmation that the program can proceed to the next step of the method. This alternatively provides additional control and flexibility on behalf of the user whilst benefitting from the simplicity of the automation using a computer program.

Optionally, step (v) may comprise employing a rigid probe approximation in which the cantilever is assumed to behave like a rigid body. Alternatively, step (v) may comprise employing an analytic model such as the Euler-Bernoulli beam theory model or other finite element methods. Advantageously, the more complex models can be used to more accurately calculate components of the cantilever motion.

A second aspect of the invention provides a scanning probe microscope. The scanning probe microscope comprises: a probe having a cantilever with a tip, wherein the cantilever comprises a null point on a surface of the cantilever; a sample holder arranged to hold a sample for measurement using the tip of the cantilever; a light source arranged to emit one or more beams of light onto the surface of the cantilever, each beam forming a measurement spot on the surface of the cantilever; an optical assembly configured to adjust the position of each measurement spot on the surface of the cantilever; and a photodetector assembly for measuring light reflected from the surface of the cantilever to measure motion of the cantilever from light reflected from each measurement spot. The scanning probe microscope is configured to perform the method according to the first aspect.

The advantages of the second aspect correspond to the advantages of the first aspect. The optional features described in relation to the first aspect also apply to the second aspect.

Preferably, the scanning probe microscope further comprises an actuator assembly configured to move the cantilever relative to the sample, the actuator assembly optionally being configured to adjust the separation between the tip and a sample along the optical axis of the light source, the sample being held by the sample holder. Advantageously this can be used to modify the tip-sample interaction.

Optionally, the scanning probe microscope may further comprise a differential interferometer configured to position first and second measurement spots on the surface of the cantilever at first and second locations each offset from the null point.

Advantageously this enables measurements of the cantilever motion to be obtained simultaneously in different locations. This advantageously enables parallel acquisition using a simple arrangement within the scanning probe microscope.

A third aspect of the invention provides a probe for performing the method according to the first aspect. The probe has a cantilever with a tip. The cantilever comprises a first end which is unsupported and a second end which is supported by the probe, wherein the tip is arranged at the first end. A first region of the cantilever has a greater width than a second region of the cantilever, wherein the first region is closer to the first end and the second region is closer to the second end. Optionally, the width of the cantilever may increase towards the first end along at least a portion of the length of the cantilever.

The width of the cantilever is measured parallel to the minor axis of the cantilever as described in relation to the first aspect.

Whilst not essential for performance of the first aspect of the invention, advantageously, the probe according to the third aspect enables measurement spots to be located further away from the null point. This increases the gain factor which advantageously further improves the accuracy of the components calculated in step (v) of the first aspect.

This can be achieved in different manners depending on the shape of the cantilever. Optionally, the width of the first end may be greater than the width of the second end.

Typically, the cantilever may comprise a surface for receiving a measurement spot, the surface having a major axis and a minor axis. Preferably, the major and minor axes are as defined above in the context of the first aspect of the invention.

Optionally, the second end may comprise an elongate body having a substantially constant width along the major axis of the cantilever surface. The first end may comprise a region having a greater width than the elongate body.

In some examples the region may be a polygonal region having four or five sides.

Optionally, the first region may have a substantially uniform width and/or the second region may have a substantially uniform width.

A fourth aspect of the invention provides a method for operating a scanning probe microscope. The scanning probe microscope comprises: a probe having a cantilever with a tip; a sample and a sample holder arranged to hold the sample for measurement using the tip of the cantilever; a light source arranged to emit one or more beams of light onto the surface of the cantilever, each beam forming a measurement spot on the surface of the cantilever; an optical assembly configured to adjust the position of each measurement spot on the surface of the cantilever; and a photodetector assembly for measuring light reflected from the surface of the cantilever to measure motion of the cantilever from light reflected from each measurement spot. The method comprises the following steps: (a) positioning a first measurement spot on the surface of the cantilever at a first location; (b) measuring the cantilever displacement at the first location whilst the tip interacts with the sample; (c) measuring the cantilever deflection at the first location whilst the tip interacts with the sample; and (d) calculating one or more components of the cantilever motion based on the measured cantilever displacement in step (b) and the measured cantilever deflection in step (c).

Advantageously, the method can be used to obtain measurements of the cantilever motion from just one measurement spot location. In this way, one or more components of the cantilever motion can be calculated without adjusting the position of the measurement spot.

Preferably, the scanning probe microscope further comprises an actuator assembly configured to move the cantilever relative to the sample, the actuator assembly optionally being configured to adjust the separation between the tip and the sample along the optical axis of the light source.

Preferably, the cantilever displacement is measured using an interferometric displacement sensor and the cantilever deflection is measured using optical beam deflection.

Preferably, the cantilever comprises a null point on a surface of the cantilever, wherein the first location is the null point.

Advantageously, when the first location is the null point, the cantilever motion is only affected by vertical forces and therefore the measured cantilever displacement typically only comprises a vertical component. The measured cantilever deflection typically comprises at least two components, one of which is the vertical component. Therefore, the calculation of non-vertical components of the cantilever motion is advantageously simpler when the first location is the null point.

A fifth aspect of the invention provides a scanning probe microscope. The scanning probe microscope comprises: a probe having a cantilever with a tip; a sample holder arranged to hold a sample for measurement using the tip of the cantilever; a light source arranged to emit one or more beams of light onto the surface of the cantilever, each beam forming a measurement spot on the surface of the cantilever; an optical assembly configured to adjust the position of each measurement spot on the surface of the cantilever; and a photodetector assembly for measuring light reflected from the surface of the cantilever to measure motion of the cantilever from light reflected from each measurement spot. The scanning probe microscope is configured to perform the method according to the fourth aspect.

Preferably, the scanning probe microscope further comprises an actuator assembly configured to move the cantilever relative to the sample, the actuator assembly optionally being configured to adjust the separation between the tip and a sample along the optical axis of the light source, the sample being held by the sample holder.

The advantages of the fifth aspect correspond to the advantages of the fourth aspect. The optional features described in relation to the fourth aspect also apply to the fifth aspect.

## BRIEF DESCRIPTION OF DRAWINGS

FIG 1 Prior art schematic of the top side of a probe showing the positions of the cantilever, detection spot, tip and sample.

FIG 2 Cantilever null points and lines

FIG 3 interferometer measurements

FIG 4 Correcting crosstalk for rotated reference frames

FIG 5 Fitting for over constrained measurements

FIG 6 Experimental example

FIG 7 Combined IDS and OBD

FIG 8 Top view interferometry solution

## DETAILED DESCRIPTION OF THE INVENTION

The force applied to the tip in any of the three cartesian directions may be estimated from the deflection using the known spring constant of the cantilever $k_i$ in some direction $i$ and Hooke's Law $F_i = k_i \delta_i$, where $i$ is either $x$, $y$, or $z$. As an example, i the case of PFM, the tip motion can be described by a three-dimensional vector $\delta$ (bold characters denote a vector):

$$\boldsymbol{\delta} = \hat{x}\delta x + \hat{y}\delta y + \hat{z}\delta z = \boldsymbol{\delta}_0 + \boldsymbol{\delta}_{AC} e^{i(\omega t + \phi)} \ .$$

Here, $\hat{x}$, $\hat{y}$ and $\hat{z}$ are the cartesian unit vectors. In this expression, the motion of the tip is separated into slowly and rapidly varying portions. For the purposes of this discussion, the slowly varying motion vector $\boldsymbol{\delta}_0$ represents motion within the feedback bandwidth of the microscope and includes measurements like force curves, cantilever preload and scanning motion and other interactions with timescales less than the response time of the cantilever feedback loop. The more rapidly varying portion $\delta_{Ac} e^{i(\omega t + \phi)}$ can be from modulation at higher frequencies and generally includes electromechanical responses from voltage modulation between the tip and sample, high frequency mechanical modulations that might be testing rheological responses, high speed force mapping, contact resonance, heterodyne measurements and host of other high frequency measurements known in the art.

Single (high) frequency electromechanical measurements of the cantilever motion can be described similarly by a sinusoidal term $A_m e^{i(\omega t + \phi_m)}$ that includes the measured amplitude $A_m$ and phase $\phi_m$, where the subscript "m" indicates a measurement made of the cantilever motion. In these and related measurements, the amplitude vector is related to the local electromechanical strain moving the tip.

The phase of the tip motion related to the polarization orientation. Phase shifts can also result from other tip-sample interactions including dissipative and viscoelastic interactions. In other measurements such as tribology or rheology for example, low frequency components are important and need to be included in the analysis of experimental data.

Interferometry provides a quantitative measure of cantilever displacement at the measurement location, $w(x,y)$. The interferometer only measures displacements along the interferometer axis. In the following, we use the measurement position dependence of the interferometer to quantify the three-dimensional tip motion. In the following we assume that the interferometer axis is aligned with the z-axis of the cantilever. This is the optical arrangement for the Cypher IDS used in this work.

The interferometer spot can be positioned on the backside of the cantilever at various locations. In the following, we will define the origin of the coordinate system as the position immediately above the tip apex. The z-displacement of the cantilever in response to apex motion is, in general, affected by all three dimensions of the tip motion $\delta x$, $\delta y$ and $\delta z$. For small strains, this can be described as a simple Taylor expansion, given by:

$$w(\text{x, y}) \approx w_0(\text{x, y}) + \left(\frac{\partial w(\text{x,y})}{\partial x'}\right)\delta x' + \left(\frac{\partial w(\text{x,y})}{\partial y'}\right)\delta y' + \left(\frac{\partial w(\text{x,y})}{\partial z'}\right)\delta z'.$$

Equation (1) describes how the tip apex strain components mix into the position-dependent interferometer signal. The first two terms in Equation (1) represent the effects of cantilever bending from motion parallel to the cantilever plane while the third term is the vertical motion.

The components are defined as $\delta_j = \delta_{0,j} + \delta_{AC,j}e^{i(\omega t+\phi_j)}$, where $j = x$, $y$ or $z$.

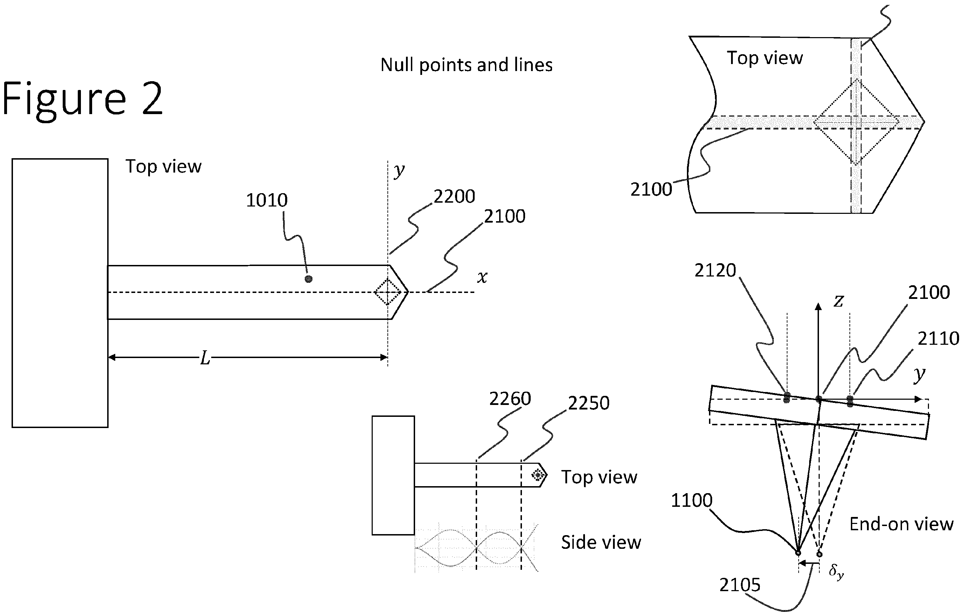

Figure 2 shows what are known as null points or lines in the cantilever motion that are governed by geometric symmetries of the cantilever and by the nature of excitation acting on the tip of the cantilever. As an example, if the tip is displaced 2105 along the Y axis, the cantilever will twist along the line longitudinal axis. This means that the displacement along the central, longitudinal axis 2100 is zero. If the interferometer measurement spot is along that central longitudinal axis the X axis, the measured displacement will be zero or approximately zero. On the other hand, the angular change at that position is non zero, $\frac{\partial w}{\partial y} \neq 0$ . This implies that an OBD measurement at the along the central axis will be sensitive to torsional twisting or bending of the cantilever. For an interferometer if the measurement spot is moved laterally along the Y axis away from the central longitudinal axis the displacement will now be non-zero (for example 2110 or 2120) where the interferometer will measure the torsional motion. Thus, by positioning the interferometer at different points along that lateral axis the Y axis, the sensitivity of motion in the of the tip in the y-axis can be varied. In another example if the tip is loaded with a high force against the sample and the tip sample position is modulated along the axis of X or X prime the tip will experience forces along the X axis. If the loading force Is high enough there will be another symmetry axis 2200 where the displacement of the top of the cantilever will be essentially 0 and if the interferometer spot is placed along this symmetry axis 2200 the response will be 0. A final example is shown in the figure 2260 and 2250, where a cantilever is being oscillated at a residence frequency in these resonant frequency oscillations, it is well known in the art that anti nodes up here where the displacement is at a minimum at 0. In this case if there are nodes or anti nodes at location 2260 or 2250 if we measure the displacement at those positions at those nodal lines we will measure no motion. Note that this implies an interferometer measurement, sensitive to the displacement will not be sensitive to that motion at these at these points an OBD measurement will be. Also, the derivative or the slope as measured by the OBD will have similar null lines where the OBD will measure substantially no response and the interferometer will measure a nan-zero amplitude. This is well-known in the art, see for example. The locations and excitation frequencies where these null lines or anti node lines exist are governed by the boundary conditions acting on the cantilever including tip excitations, long-range electrostatic forces, cantilever damping and other effects.

As discussed above, symmetry implies that, at least at low frequencies, interferometrically measured displacements have null regions with negligible response to various components. For example, the central longitudinal axis will not respond to lateral excitations since $\left(\frac{\partial w(\text{x, y})}{\partial y}\right) \approx 0$ 2100 . A similar argument holds for longitudinal excitations at the x-coordinate immediately above the tip, where the rocking motion has a node $\left(\frac{\partial w(\text{x, y})}{\partial x}\right) \approx 0$ 2200 . The intersection of these two nodes happens above the tip 1020, meaning that the displacement measured at this point only contains information on the vertical tip motion $\delta z$ since both $\left(\frac{\partial w(\text{x, y})}{\partial x}\right)_{tip} \approx 0$ and $\left(\frac{\partial w(\text{x, y})}{\partial y}\right)_{tip} \approx 0$ .

The plan-view spot coordinates $x$ and $y$ are experimental observables, typically measured with a camera or with position encoders on the AFM. The cantilever-dependent quantities, the length $L$ and tip height $h$ can also be directly measured, estimated from the manufacturer's specifications or other characterization approaches known in the art.

The partial derivatives of the cantilever shape at the spot position can be experimentally estimated by moving the tip a known or approximately known quantity. This can be accomplished with force curves and x or y modulation measurements. In addition, these can be theoretically estimated from analytic solutions such as the Euler-Bernoulli solution or finite-element simulations of realistic cantilever geometries and materials and other approaches known in the art.

A powerful feature of this invention is that many of the methods that have been developed for lateral and longitudinal calibrations in OBD - type AFMs can be adopted for this invention by replacing the OBD spot with a laterally and/or longitudinally offset interferometric spot. These include: (i) Direct application of a force to the cantilever beam at a known location, (ii) Modulation with a suspended platform, (iii) the "Wedge method" - scanning across two sloped surfaces and measuring the friction loop, (iv) Measurement of torsional resonances.

Once the quantities $\left(\frac{\partial w(x,y)}{\partial x}\right)$, $\left(\frac{\partial w(x,y)}{\partial y}\right)$, and $\left(\frac{\partial w(x,y)}{\partial z}\right)$ have been determined, Equation (1) still contains three unknowns, the strain components of the tip, $\delta x$, $\delta y$ and $\delta z$. One way to determine these with three independent displacements at different locations on the cantilever surface. As discussed above and as we will explore below, we can demonstrate this through sequential and/or parallel interferometric measurements.

Figure 30000 shows the top of a cantilever with a plurality of spot positions where the displacement is measured. In this example, the measurement positions are displaced along the principle cartesian axes, but that is not required. Motion of the tip $\delta x$, $\delta y$ and $\delta z$ causes the body of the cantilever to displace and tilt. In the analysis below we will assume that the cantilever behaves like a rigid body. Then, the connection between the measured displacements on the top surface of the cantilever and the three-dimensional motion of the tip is straightforward to calculate. One useful concept in this case is that the tip location point, the position immediately above the tip in the cantilever top surface and the measurement point forms a geometric triangle. As the tip point moves, both of the other points in the triangle must also move, allowing the relationship between the measurement spot and the tip motion to be calculated with simple trigonometry.

The rigid probe approximation may not be sufficient in some cases. We may use a more complete Euler-Bernoulli, other analytic models or computer simulated structures such as those possible to model with finite element methods. The results of these models can then be used to better approximate the cantilever bending at the measurement locations, for example by including a quadratic term in the lateral coordinates.

In the example below, if we assume the cantilever can be treated as a rigid body in the vicinity of the tip, the analysis of the response becomes a matter of simple geometry. The IDS (interferometer detection ssensor) spot is positioned on the backside of the cantilever on either side of the tip axis at positions $x_{\underline{+}}$. In this case, the amplitude measured by the IDS at the two positions will be given by the complex expressions

2.

$$\delta x(t) = \delta x_{DC}(t) + A_x e^{i(\omega t + \phi_x)} = \delta x_{DC} + \delta x_{AC},$$

3.

$$\delta z(t) = \delta z_{DC}(t) + A_z e^{i(\omega t + \phi_z)} = \delta z_{DC} + \delta z_{AC},$$

and

4.

$$\delta y(t) = \delta y_{DC}(t) + A_y e^{i(\omega t + \phi_y)} = \delta y_{DC} + \delta y_{AC}.$$

In expressions (2)-(4), we have separated the slowly varying "DC" motion from the rapidly varying, modulated "AC" component. This is for convenience in the PFM measurements in this discussion, since the signal of interest in this case is the amplitude at the potential drive frequency. In fact, the vertical strain $\delta z$ may actually be used to control the vertical load of the tip on the sample. There are many examples this invention covers that makes use of multiple frequencies of the response including very high and very low (DC) observables. While we have separated these for PFM, there are many other types of measurements, for example nanomechanical or nanorheological measurements where the slowly varying terms may contain very important viscoelastic information.

Symmetry implies that the coupling of lateral tip motion into vertical displacement of the cantilever surface is substantially zero along the central symmetry axis of the cantilever 6100. Similarly, when the cantilever is strongly coupled with the sample surface (kt-s>>kc), but allowed to rock, there should be a similar null axis 6110 where the longitudinal excitations are not coupled into vertical surface motion. These locations can be used to select Measurement points such that the measurements contain a particular mixture of tip displacement components.

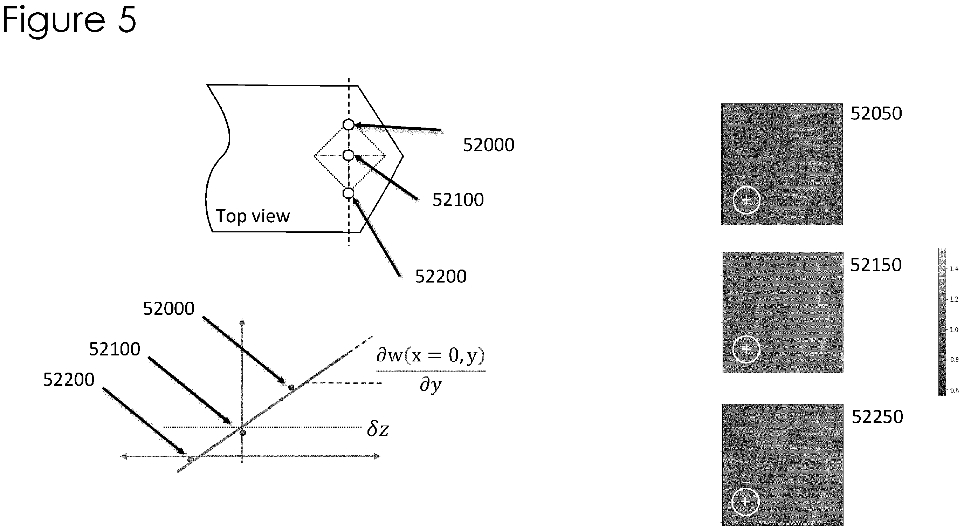

From Figure 30000, we will use the coordinates of the spot positions offset from the tip location (w5) to estimate the in-plane sensitivity factors. We will also assume that the cantilever is parallel to the sample surface ($\theta = 0$). We will adopt the notation $G_{x+} \equiv \left(\frac{\partial w(x=x+,y)}{\partial x}\right) = x_+/h$ , $G_{x-} \equiv \left(\frac{\partial w(x=x-,y)}{\partial x}\right) = x_-/h$ , $G_{y+} \equiv \left(\frac{\partial w(x,y=y+)}{\partial y}\right) = y_+/h$ and $G_{y-} \equiv \left(\frac{\partial w(x,y=y-)}{\partial y}\right) = y_-/h$ to describe the geometric "lever arms" that couple in-plane tip motion to vertical displacement measured by interferometry as shown in Figure 5. will result in experimentally observable displacements at the interferometer measurement positions of:

5.

$$w_{AC,x+} = \delta z'_{AC} + \delta x'_{AC} G_{x+}$$

6.

$$w_{AC,x-} = \delta z'_{AC} - G_{x-}\delta x'_{,AC}$$

7.

$$w_{AC,y+} = \delta z'_{AC} + G_{y+}\delta y'_{AC}$$

8.

$$w_{AC,y-} = \delta z'_{AC} - G_{y-}\delta y'_{AC}$$

Equations (5-8) can be solved to yield the fully three-dimensional expressions for the tip trajectory, completely expressed in terms of experimental observables:

9.

$$\delta x'_{ac} = \frac{w_{x+} - w_{x-}}{G_{x+} + G_{x-}}$$

10.

$$\delta y'_{ac} = \frac{w_{y+} - w_{y-}}{G_{y+} + G_{y-}}$$

11.

$$\delta z'_{ac} = \frac{w_{x-}G_{x+} + w_{x+}G_{x-}}{G_{x+} + G_{x-}} ,$$

and

12.

$$\delta z'_{ac} = \frac{w_{y-}G_{y+} + w_{y+}G_{y-}}{G_{y+} + G_{y-}}.$$

By placing the measurement points along the symmetry axes of the cantilever and realizing that three independent measurements are sufficient to solve for three unknowns, the analysis can be simplified 31000.

31000 shows 3 measurement positions W 1, W2 and W3. W1 is positioned immediately above the tip of the cantilever in this position, W1 is only sensitive to vertical deflections displacements of the cantilever tip. W2 and W3 are displaced along the Y and X axes respectively. In these positions, they are sensitive to a mixture of vertical motion of the tip and in plane motion of the tip. For example, W2 will be a combination of vertical motion and lateral displacement of the cantilever tip while W3 displaced along the X or longitudinal axis, will contain a mixture of both vertical and in-plane longitudinal tip motion contributions.

This allows the gain factors to be simplified as $G_x = x/h$ and $G_y = y/h$, with the other gain factors substantially zero. Relationships 9-12 can then be simplified to estimate the three-dimensional tip motion:

13.

$$\delta x_{ac} = \frac{w_x - w_z}{G_x},$$

10.

$$\delta y_{ac} = \frac{w_y - w_z}{G_y},$$

and

11.

$$\delta z_{ac} = w_z.$$

For completeness, Figure 33000 shows another possible situation, this time with the measurement spots located substantially away from the null lines and the null point above the tip. In this case, all three measurements w1, w2 and w3 will contain a mixture of all three components of the tip motion.

Figure 5 shows another embodiment where the measurement of two of the three coordinates are over constrained. In this case we measure along the lateral axis at three positions 52000, 52100 and 52200. The measurements at the three spot positions 52000, 52100 and 52200 can be used to form images as shown in the figure 52050 corresponds to position LF 2000, image 52150 corresponds to position 52100 and image 52250 corresponds to measurement position 52200. The circled pixel in all three images was selected to be plotted in the line fit. These three points can be fit by a standard least squares line fitting routine and they will yield the Y intercept and slope of the resulting line when plotted versus the lateral position. In this case if the line is centered over the tip The Y intercept of the fitted line is $\delta z$, while the slope allows us to calculate the in plane $\delta y$ motion of the tip through the relationship $\delta y = \frac{\partial w(x=0,y)}{\partial y} \cdot h$ $\delta y$ This approach can be extended to a plurality of measurements along the lateral axis to increase confidence in the fitted line. It is also obviously extendable to other axes, in particular the longitudinal axis of the cantilever. In that case the fitted line will yield the vertical and the in plane longitudinal component of the motion. Note that the fitting procedure used at the individual pixel shown in the images can be fit over the entire image yielding an image of the vertical and in plane motion of the tip.

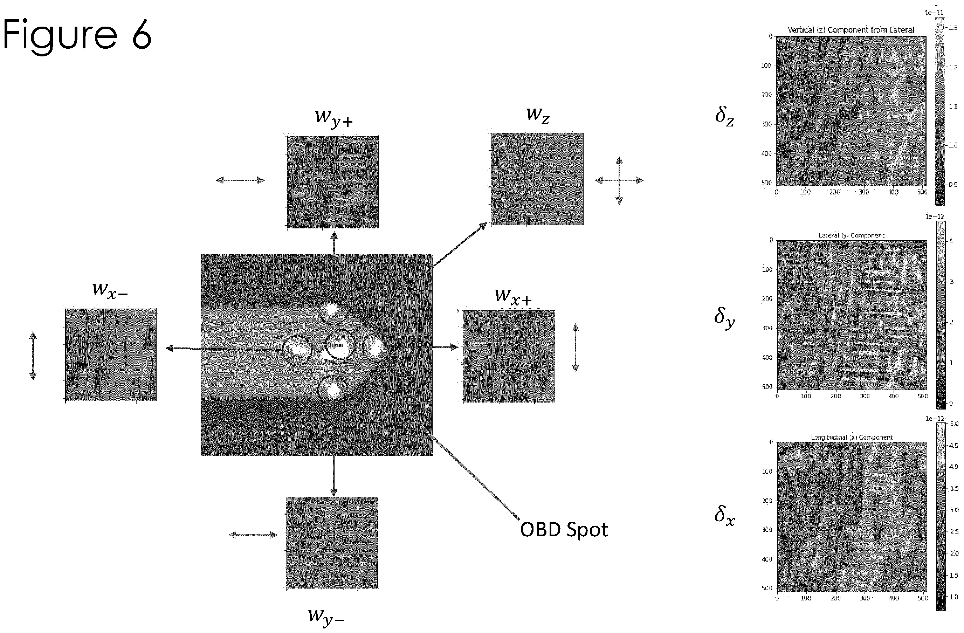

Figure 6 shows a series of measurements based on the above discussion where the full 3 dimensional motion of the tip has been measured with a series of five measurement points as circled in the Figure. The $\delta y$ component was estimated using the technique described in Figure 5 while the $\delta x$ component was estimated using a similar approach only with points measured along the x axis. In both cases an estimate of $\delta z$ was also made and that is plotted on the right hand of the figure note that in this particular case the microscope used also had an OBD detector at a fixed position OBD Spot that was used to operate the Z feedback loop during the measurement process. That is one approach; however it is also possible to use the interferometer signal for the Z feedback loop as well. In the case, since the interferometer spot locations are at different points on the surface of the cantilever, care must be taken to adjust the set point to account for the different sensitivities at different spot locations.

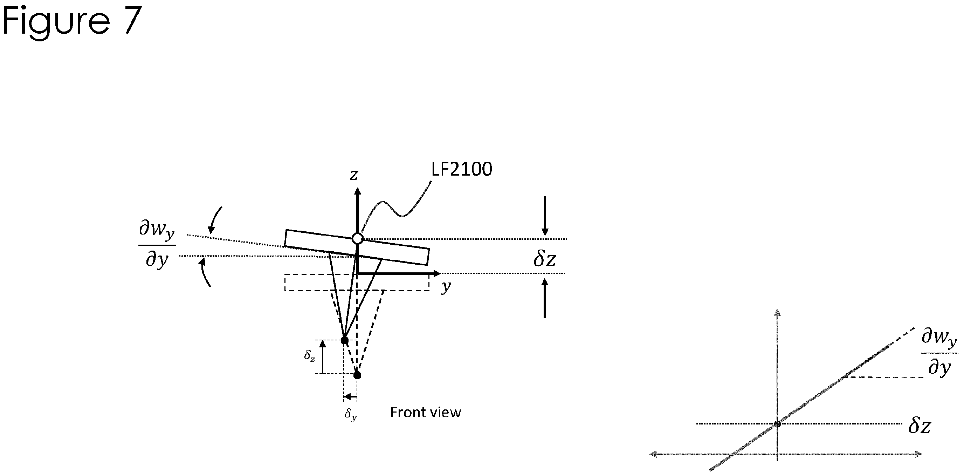

It may be preferable in some cases to use a combination of the interferometer signal and the simultaneously measured OBD deflection signal to estimate components of both the vertical and in plane motion. Figure 7 shows this embodiment where both the interferometer and OBD spots (different in some embodiments, the same optical spot in others) are placed immediately above the tip. The interferometer is used to measure the displacement in the vertical direction while the OBD signal is used to measure the local slope at the same location, In this case, we have substituted two independent interferometer measurements for one interferometer measurement and one OBD measurement. It should be clear that both methods are sufficient to define the shape of the top of the cantilever and therefore to resolve both the in-plane motion as well as the vertical motion of the tip.

The cantilever shape may be better described with higher-order functions, for example quadratic functions. While linear approximations can be determined from two-point measurements, higher order functions may require more measurement points. More measurement points may have the advantage of better defining uncertainties and errors in the measurements.

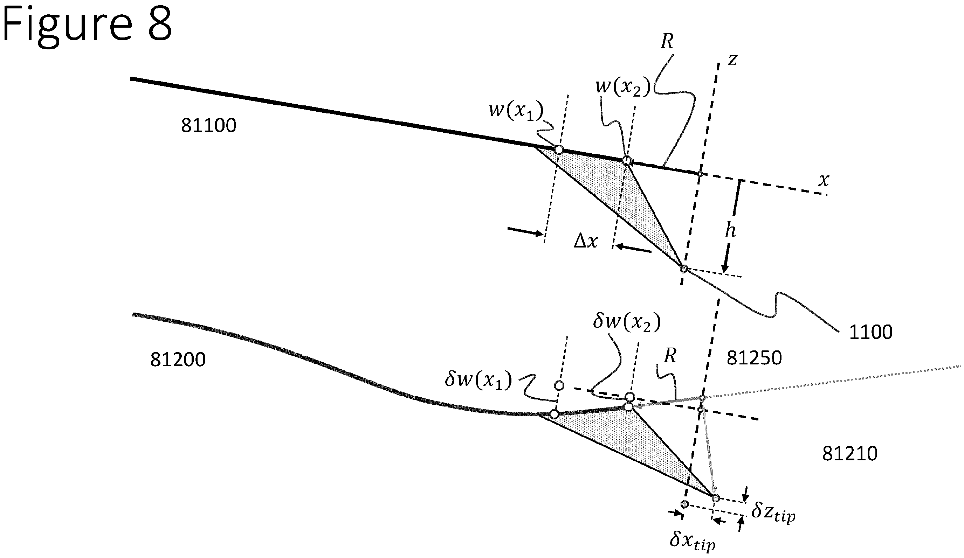

As is well known in the art, some cantilevers 1000 have a "tip view" characteristic, illustrated in Figure 8, where the location of the tip extends past the end of the cantilever by a distance $R$, allowing it to be visible from above 1100, that may be advantageous for positioning the tip on the sample surface with high positional accuracy. In this case, another embodiment of the invention is required. It is difficult or even impossible to place the spot position immediately above the tip 1100 still reflect sufficient light back into the interferometer to measure the tip motion. In this case, the spot position can be positioned at a known distance away from the tip, $w(x_2)$, for example, such that the interferometer operation is sufficiently optimized to make a vertical positional measurement.

Figure 8 shows an undeflected cantilever 81100 with a tip view tip 1100 that protrudes beyond the end of the cantilever by R. The size of the cantilever distortion is greatly exaggerated in 81200, typical tip 1100 motion is on the order of nanometers, while the scale of many cantilevers is on the order of tens to hundreds of microns. In this embodiment, two interferometric measurement spots are positioned at $w(x_1)$ and $w(x_2)$, at a position that allows sufficient light to reflect back to the interferometric detector. In 81200, the cantilever is deflected by both vertical and in plane motion . This changes the shape of the cantilever which in turn changes the measured values of at $w(x_1)$ and $w(x_2)$ by the amounts at $\delta w(x_1)$ and $\delta w(x_2)$. The two measurements $\delta w(x_1)$ and $\delta w(x_2)$ allow the slope of the deflected cantilever body to be extrapolated to a distance R beyond the end of the cantilever. This is a common technique for inferring the position of the tip of a cantilever (see for example Labuda et al.) Briefly, the vertical tip motion is given by

$$\delta z = R \left( \frac{\delta w(x_2) - \delta w(x_1)}{\Delta x} \right)$$

. Similarly the in-plane motion of the tip is described by

$$\delta z = h \left( \frac{\delta w(x_2) - \delta w(x_1)}{\Delta x} \right)$$

. The estimates are in the rigid tip limit. It also assumes that the effects of other forces such as body electrostatic forces are negligible.

In the case that these assumptions are not valid, it may be necessary to invoke a different model such as the euler-bernoulli beam model or numerical finite element simulations. In that case this method is still powerful in that instead of fitting to a simple straight line such as in the example above the measured points $\delta w(x_1)$ and $\delta w(x_2)$ and perhaps more measurement points on the back of the cantilever, can be used to fit to more involved and potentially more accurate tip motion models. Note that the embodiment of Figure 7, where both a slope measurement with OBD and a displacement measurement with an interferometer are also sufficient to extrapolate the tip motion. This approach may obviate the need for two interferometric measurement spots.

The inventor has noted that for modulated measurements, it is advantageous to scan the tip relative to the surface in a direction *orthogonal* to the measured in-plane component. For example, if the microscope is configured to measure y-component of the in-plane response, it is preferable to move from measurement point to point by traveling primarily in the x-direction. This may be less critical if the tip is moved in such a manner where it is substantially immobile during the measurement process.

As discussed above, OBD measurements are subject to crosstalk between longitudinal and lateral bending of the cantilever. This can originate from misalignments between the cantilever coordinate systems and the OBD detector coordinate system. Correcting this misalignment, while possible, is difficult and may require repetition when a new cantilever is loaded into the AFM system. (see for example "Cross-talk correction in atomic force microscopy" A. Hoffmann, T. Jungk and E. Soergel, Review of Scientific Instruments 2007 Vol. 78 Issue 1).

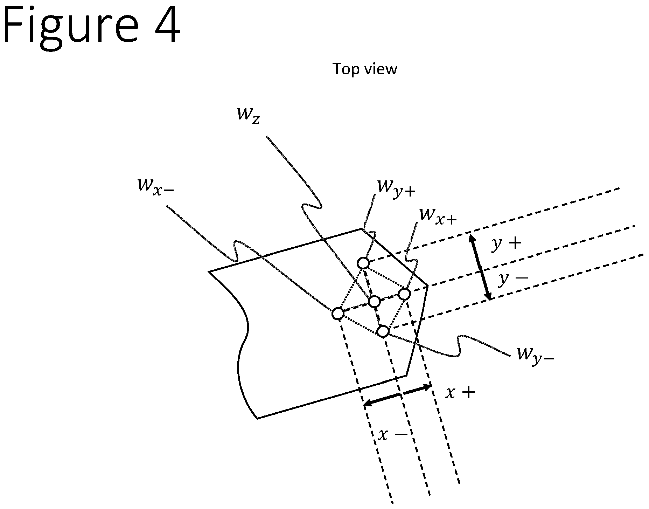

Interferometric detection allows a simple solution to this. Since the interferometer is insensitive to the displacement, the mix of components can be controlled by choosing the spot locations on the top of the cantilever in the reference frame of the cantilever. This is shown in Figure 4, where a cantilever that happens to have been loaded at an angle is shown. By positioning the spot locations in the reference frame of the cantilever, specifically with respect to the tip location and the longitudinal and lateral axes of the cantilever. The measurements are thus assured to be in the same frame of the lever and crosstalk between the longitudinal, lateral and/or vertical will be substantially avoided.

It should be appreciated that while the methods discussed above can be performed serially by as few as one interferometric sensors, these measurements may be improved by performing them with a plurality of interferometric sensors deployed at a plurality of locations on the cantilever.

Positioning the spot away from the tip allows the possibility of optimizing the IDS sensitivity for one or more specific eigenmodes of the cantilever's dynamic response. This may optionally be accomplished while intentionally avoiding sensitivity to another eigenmode for example by positioning the spot at a position on the cantilever at a null position for the mode which is to be avoided. In this method, the normal or torsional eigenmodes are first identified, which may be accomplished by performing a thermal tune and identifying the frequencies of Gaussian distributions in the resulting power spectral density. Alternatively, a driven tune may be performed using photothermal actuation, a piezoelectric actuator, or any other actuator known to those skilled in the art, and the result of this tune can be used to identify the eigenmodes and optionally, the spatial location of the eigenmode null positions. The range of frequencies for the eigenmodes of a particular cantilever may optionally be tabulated in advance and used to facilitate the search for resonance frequencies or used to identify which frequencies correspond to which normal or torsional eigenmodes. Once the frequencies of the eigenmodes have been established, the spot is moved until the measured amplitude of one particular eigenmode is maximized, or some quantity that is a function of multiple eigenmode amplitudes is maximized, or until the amplitude of one particular eigenmode is reduced to only noise. A root-finding or other optimization method may be used to determine which direction the spot should be moved to maximize or minimize the response to one or more eigenmodes. Alternatively, the spot may be moved by preset increments until the response of interest achieves a maximum or minimum value.

In some cases, it may be desirable to have a prescribed mix of modes in the measured signal. In this case, the spot position can be adjusted to optimize the overall experimental goals. For example, in the case of bimodal and related techniques, there are two or more resonant modes that are used in the measurement of sample shape and properties. Frequently, it is desirable to have one mode operating at a relatively large amplitude and other modes at relatively small amplitudes. In this case, it may be advantageous to position the spot such that the sensitivity of the small amplitude measurement is maximized even though the sensitivity of the large amplitude mode may thereby be reduced. In another case, it may be useful to perform a force curve while measuring properties of one or more resonances of the cantilever. In that case, it may be advantageous to place the spot position where the sensitivity to the smallest of the signals is maximized, at the expense of the sensitivity of some of the larger signals.

## Claims

1. A method for operating a scanning probe microscope, the scanning probe microscope comprising:

   a probe having a cantilever with a tip, wherein the cantilever comprises a null point on a surface of the cantilever;
   a sample and a sample holder arranged to hold the sample for measurement using the tip of the cantilever;
   a light source arranged to emit one or more beams of light onto the surface of the cantilever, each beam forming a measurement spot on the surface of the cantilever;
   an optical assembly configured to adjust the position of each measurement spot on the surface of the cantilever; and
   a photodetector assembly for measuring light reflected from the surface of the cantilever to measure motion of the cantilever from light reflected from each measurement spot;
   the method comprising the following steps:

      (i) positioning a first measurement spot on the surface of the cantilever at a first location offset from the null point;
      (ii) measuring the cantilever motion at the first location whilst the tip interacts with the sample;
      (iii) positioning a second measurement spot on the surface of the cantilever at a second location offset from the null point and the first location;
      (iv) measuring the cantilever motion at the second location whilst the tip interacts with the sample; and
      (v) calculating one or more components of the cantilever motion based on the relative positions of each of the first and second locations to the null point and the measurements at the first and second locations from steps (ii) and (iv).

2. A method according to claim 1, wherein each of the one or more components calculated in step (v) is parallel to the optical axis of the light source or perpendicular to the optical axis of the light source, wherein at least one of the one or more components calculated in step (v) is perpendicular to the optical axis of the light source and is aligned either with a major axis of the cantilever or a minor axis of the cantilever, wherein the minor axis is perpendicular to the major axis along the surface of the cantilever.

3. A method according to claim 1 or claim 2, wherein step (v) comprises:

   calculating a first component of the cantilever motion based on the relative positions of each of the first and second locations to the null point and the measurements at the first and second locations from steps (ii) and (iv); and

calculating a second component of the cantilever motion based on the relative positions of each of the first and second locations to the null point and the measurements at the first and second locations from steps (ii) and (iv); wherein the second component is perpendicular to the first component.

4. A method according to any of the preceding claims, wherein the first and second locations are symmetrical around the null point.

5. A method according to any of the preceding claims, wherein a straight line drawn between the first and second locations is substantially parallel to a major axis of the cantilever, or wherein a straight line drawn between the first and second locations is substantially parallel to a minor axis of the cantilever, wherein the minor axis is perpendicular to the major axis along the surface of the cantilever.

6. A method according to claim 5, wherein the first and second locations are each on the major axis of the cantilever, or wherein the first and second locations are each on the minor axis of the cantilever.

7. A method according to any of the preceding claims, wherein the cantilever motion is cantilever displacement or wherein the cantilever motion is cantilever deflection; wherein when the cantilever motion is cantilever displacement, the cantilever motion is measured using an interferometric displacement sensor, and when the cantilever motion is cantilever deflection, the cantilever motion is measured using optical beam deflection.

8. A method according to claim 7, wherein the interferometric displacement sensor comprises a differential interferometer.

9. A method according to any of the preceding claims, wherein the steps are performed one after the other; or wherein steps (ii) and (iv) are performed simultaneously.

10. A method according to any of the preceding claims, wherein step (v) comprises calculating one or more components of the cantilever motion based on the relative positions of each of the first and second locations to the null point, the height of the tip, and the measurements at the first and second locations from steps (ii) and (iv).

11. A method according to any of the preceding claims, the method further comprising the following steps:

(vi) positioning a third measurement spot on the surface of the cantilever at a third location offset from the null point and the first and second locations;
(vii) measuring the cantilever motion at the third location whilst the tip interacts with the sample;
(viii) positioning a fourth measurement spot on the surface of the cantilever at a fourth location offset from the null point and the first, second and third locations; and
(ix) measuring the cantilever motion at the fourth location whilst the tip interacts with the sample; and wherein step (v) comprises calculating one or more components of the cantilever motion based on the relative positions of each of the first, second, third and fourth locations to the null point and the measurements at the first, second, third and fourth locations from steps (ii), (iv), (vii) and (ix).

12. A method according to any of the preceding claims, wherein the null point is substantially aligned with the tip along the optical axis of the light source.

13. A method according to any of the preceding claims, wherein the method comprises executing a computer program to cause the scanning probe microscope to perform each of the steps of the method.

14. A scanning probe microscope comprising:

a probe having a cantilever with a tip, wherein the cantilever comprises a null point on a surface of the cantilever;
a sample holder arranged to hold a sample for measurement using the tip of the cantilever;
a light source arranged to emit one or more beams of light onto the surface of the cantilever, each beam forming a measurement spot on the surface of the cantilever;
an optical assembly configured to adjust the position of each measurement spot on the surface of the cantilever; and
a photodetector assembly for measuring light reflected from the surface of the cantilever to measure motion of the cantilever from light reflected from each measurement spot;

wherein the scanning probe microscope is configured to perform the method of any of claims 1 to 13.

15. A scanning probe microscope according to claim 14, further comprising an actuator assembly configured to adjust the separation between the tip and a sample along the optical axis of the light source, the sample being held by the sample holder.

16. A scanning probe microscope according to claim 14 or claim 15, further comprising a differential interferometer configured to position first and second measurement spots on the surface of the cantilever at first and second locations each offset from the null point.

17. A method for operating a scanning probe microscope, the scanning probe microscope comprising:

a probe having a cantilever with a tip;
a sample and a sample holder arranged to hold the sample for measurement using the tip of the cantilever;
a light source arranged to emit one or more beams of light onto the surface of the cantilever, each beam forming a measurement spot on the surface of the cantilever;
an optical assembly configured to adjust the position of each measurement spot on the surface of the cantilever; and
a photodetector assembly for measuring light reflected from the surface of the cantilever to measure motion of the cantilever from light reflected from each measurement spot;
the method comprising the following steps:

(a) positioning a first measurement spot on the surface of the cantilever at a first location;
(b) measuring the cantilever displacement at the first location whilst the tip interacts with the sample;
(c) measuring the cantilever deflection at the first location whilst the tip interacts with the sample; and
(d) calculating one or more components of the cantilever motion based on the measured cantilever displacement in step (b) and the measured cantilever deflection in step (c).

18. A scanning probe microscope comprising:

a probe having a cantilever with a tip;
a sample holder arranged to hold a sample for measurement using the tip of the cantilever;
a light source arranged to emit one or more beams of light onto the surface of the cantilever, each beam forming a measurement spot on the surface of the cantilever;
an optical assembly configured to adjust the position of each measurement spot on the surface of the cantilever; and
a photodetector assembly for measuring light reflected from the surface of the cantilever to measure motion of the cantilever from light reflected from each measurement spot;
wherein the scanning probe microscope is configured to perform the method of claim 17.

Figure 1

PRIOR ART

Figure 2

# Figure 3

Figure 4

Top view

# Figure 5

EP 4 560 323 A1

# Figure 6

$w_{y+}$

$w_z$

$w_{x-}$

$w_{x+}$

OBD Spot

$w_{y-}$

$\delta_z$

$\delta_y$

$\delta_x$

Vertical (z) Component from Lateral

Lateral (y) Component

Longitudinal (x) Component

Figure 7

# Figure 8

EP 4 560 323 A1

Europäisches
Patentamt
European
Patent Office
Office européen
des brevets

# EUROPEAN SEARCH REPORT

**Application Number**

EP 24 16 3540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/016932 A1 (HUMPHRIS ANDREW [GB]) 19 January 2017 (2017-01-19) * figures 1-4,7-12 * * paragraph [0048] - paragraph [0072] * * paragraph [0089] - paragraph [0107] * | 1-16 | INV. G01Q20/02 |
| X | WAGNER RYAN ET AL: "Spatial spectrograms of vibrating atomic force microscopy cantilevers coupled to sample surfaces", APPLIED PHYSICS LETTERS, AMERICAN INSTITUTE OF PHYSICS, 2 HUNTINGTON QUADRANGLE, MELVILLE, NY 11747, vol. 103, no. 26, 23 December 2013 (2013-12-23), XP012184276, ISSN: 0003-6951, DOI: 10.1063/1.4840116 [retrieved on 1901-01-01] * figures 1,2 * * page 1, column 2, paragraph 3 - page 4, column 2, paragraph 3 * | 1-13,15, 16 | |
| X | WO 2009/066555 A1 (HITACHI LTD [JP]; WATANABE MASAHIRO [JP] ET AL.) 28 May 2009 (2009-05-28) | 1-7,9, 10,12-15 | TECHNICAL FIELDS SEARCHED (IPC)<br>G01Q |
| A | * figures 4B, 5 * | 8,11,16 | |

The present search report has been drawn up for all claims

| Place of search | Date of completion of the search | Examiner |
|---|---|---|
| The Hague | 30 August 2024 | Polesello, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**Application Number**

EP 24 16 3540

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-16

☐ The present supplementary European search report has been drawn up for those parts of the European patent application which relate to the invention first mentioned in the claims (Rule 164 (1) EPC).

33

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

    1. claims: 1-16

        Method for operating a scanning probe microscope and
        scanning probe microscope configured to perform said method,
        wherein a cantilever having  a null point is illuminated at
        a first and second positions offset from the null point and
        from each other, measurements are taken at said first and
        second positions and components of the motion of the
        cantilever are determined based on said measurements
                            - - -


    2. claims: 17, 18

        Method for operating a scanning probe microscope and
        scanning probe microscope configured to perform said method,
        wherein a cantilever is illuminated at one
        position,displacement and deflection of the cantilever are
        measured and components of the motion of the cantilever are
        calculated from said measurements
                            - - -

**ANNEX TO THE EUROPEAN SEARCH REPORT
ON EUROPEAN PATENT APPLICATION NO.**

EP 24 16 3540

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | Publication date | Patent family member(s) | | Publication date |
|---|---|---|---|---|
| US 2017016932 A1 | 19-01-2017 | EP | 2913681 A1 | 02-09-2015 |
| | | EP | 3111236 A1 | 04-01-2017 |
| | | JP | 2017508156 A | 23-03-2017 |
| | | JP | 2020112566 A | 27-07-2020 |
| | | US | 2017016932 A1 | 19-01-2017 |
| | | WO | 2015128459 A1 | 03-09-2015 |
| WO 2009066555 A1 | 28-05-2009 | JP | 2009128139 A | 11-06-2009 |
| | | WO | 2009066555 A1 | 28-05-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9841436 B

**Non-patent literature cited in the description**

- **MUNZ**. *J. Phys. D: Appl. Phys.*, 2010, vol. 43, 063001
- **ASAY D B** ; **KIM S H**. *Rev. Sci. Instrum.*, 2006, vol. 77, 043903
- **N. BALKE** ; **S. JESSE** ; **P. YU** ; **B. CARMICHAEL** ; **S. V. KALININ** ; **A. TSELEV**. *arXiv preprint arXiv: 1603.07203*, 2016
- **G. BINNIG** ; **C. F. QUATE** ; **C. GERBER**. *Physical review letters*, 1986, vol. 56 (9), 930
- **G. MEYER** ; **N. M. AMER**. *Applied Physics Letters*, 1990, vol. 57 (20), 2089-2091
- **R. ERLANDSSON** ; **G. HADZIIOANNOU** ; **C. M. MATE** ; **G. M. MCCLELLAND** ; **S. CHIANG**. *The Journal of Chemical Physics*, 1988, vol. 89 (8), 5190-5193
- **Y. MARTIN** ; **C. C. WILLIAMS** ; **H. K. WICKRAMA-SINGHE**. *Journal of Applied Physics*, 1987, vol. 61 (10), 4723-4729
- **D. ROYER** ; **E. DIEULESAINT** ; **Y. MARTIN**. *Ieee Transactions on Ultrasonics Ferroelectrics and Frequency Control*, 1986, vol. 33 (1), 109-109
- **R. ERLANDSSON** ; **G. M. MCCLELLAND** ; **C. M. MATE** ; **S. CHIANG**. *Journal of Vacuum Science & Technology a-Vacuum Surfaces and Films*, 1988, vol. 6 (2), 266-270
- **D. RUGAR** ; **H. J. MAMIN** ; **R. ERLANDSSON** ; **J. E. STERN** ; **B. D. TERRIS**. *Review of Scientific Instruments*, 1988, vol. 59 (11), 2337-2340
- **S. WATANABE** ; **K. HANE** ; **T. GOTO**. *Journal of Vacuum Science & Technology B*, 1992, vol. 10 (1), 1-5
- **M. HOUMMADY** ; **E. FARNAULT** ; **T. YAHIRO** ; **H. KAWAKATSU**. *Journal of Vacuum Science & Technology B*, 1997, vol. 15 (4), 1539-1542
- **C. M. MATE** ; **G. M. MCCLELLAND** ; **R. ERLANDS-SON** ; **S. CHIANG**. *Physical Review Letters*, 1987, vol. 59 (17), 1942-1945
- **M. RADMACHER** ; **R. W. TILLMANN** ; **M. FRITZ** ; **H. E. GAUB**. *Science*, 1992, vol. 257 (5078), 1900-1905
- **E. LIU** ; **B. BLANPAIN** ; **J. P. CELIS**. *Wear*, 1996, vol. 192 (1-2), 141-150

- **G. BOGDANOVIC** ; **A. MEURK** ; **M. W. RUTLAND**. *Colloids and Surfaces B-Biointerfaces*, 2000, vol. 19 (4), 397-405
- **S. ECKE** ; **R. RAITERI** ; **E. BONACCURSO** ; **C. REINER** ; **H. J. DEISEROTH** ; **H. J. BUTT**. *Review of Scientific Instruments*, 2001, vol. 72 (11), 4164-4170
- **A. FEILER** ; **P. ATTARD** ; **I. LARSON**. *Review of Scientific Instruments*, 2000, vol. 71 (7), 2746-2750
- **R. J. CANNARA** ; **M. EGLIN** ; **R. W. CARPICK**. *Review of Scientific Instruments*, 2006, vol. 77 (5)
- **R. W. CARPICK** ; **M. SALMERON**. *Chemical Reviews*, 1997, vol. 97 (4), 1163-1194
- **S. BIGGS** ; **R. CAIN** ; **N. W. PAGE**. *Journal of Colloid and Interface Science*, 2000, vol. 232 (1), 133-140
- **M. A. LANTZ** ; **S. J. OSHEA** ; **A. C. F. HOOLE** ; **M. E. WELLAND**. *Applied Physics Letters*, 1997, vol. 70 (8), 970-972
- **J. L. HAZEL** ; **V. V. TSUKRUK**. *Journal of Tribology-Transactions of the Asme*, 1998, vol. 120 (4), 814-819
- **C. P. GREEN** ; **H. LIOE** ; **J. P. CLEVELAND** ; **R. PROKSCH** ; **P. MULVANEY** ; **J. E. SADER**. *Review of Scientific Instruments*, 2004, vol. 75 (6), 1988-1996
- **D. F. OGLETREE** ; **R. W. CARPICK** ; **M. SALMER-ON**. *Review of Scientific Instruments*, 1996, vol. 67 (9), 3298-3306
- **M. VARENBERG** ; **I. ETSION** ; **G. HALPERIN**. *Review of Scientific Instruments*, 2003, vol. 74 (7), 3362-3367
- **E. TOCHA** ; **H. SCHONHERR** ; **G. J. VANCSO**. *Langmuir*, 2006, vol. 22 (5), 2340-2350
- **D. CHOI** ; **W. HWANG** ; **E. YOON**. *Journal of Microscopy*, 2007, vol. 228 (2), 190-199
- **K. VOITCHOVSKY** ; **J. J. KUNA** ; **S. A. CONTERA** ; **E. TOSATTI** ; **F. STELLACCI**. *Nature Nanotechnology*, 2010, vol. 5 (6), 401-405
- **G. B. KAGGWA** ; **P. C. NALAM** ; **J. I. KILPATRICK** ; **N. D. SPENCER** ; **S. P. JARVIS**. *Langmuir*, 2012, vol. 28 (16), 6589-6594

- **F. LIU** ; **C. L. ZHAO** ; **F. MUGELE** ; **D. VAN DEN ENDE**. *Nanotechnology*, 2015, vol. 26 (38)
- **S. H. KHAN** ; **E. L. KRAMKOWSKI** ; **P. M. HOFFMANN**. *Langmuir*, 2016, vol. 32 (42), 10802-10807
- **C. CAFOLLA** ; **W. FOSTER** ; **K. VOITCHOVSKY**. *Science Advances*, 2020, vol. 6 (14)
- **C. CAFOLLA** ; **K. VOITCHOVSKY**. *Nanoscale*, 2020, vol. 12 (27), 14504-14513
- **R. SZOSZKIEWICZ** ; **E. RIEDO**. *Appl. Phys. Lett.*, 2005, vol. 87 (3)
- **L. BOCQUET** ; **J. L. BARRAT**. *Soft Matter*, 2007, vol. 3 (6), 685-693
- **J. L. BARRAT** ; **L. BOCQUET**. *Physical Review Letters*, 1999, vol. 82 (23), 4671-4674
- **J. BAUDRY** ; **E. CHARLAIX** ; **A. TONCK** ; **D. MAZUYER**. *Langmuir*, 2001, vol. 17 (17), 5232-5236
- **L. BOCQUET** ; **E. CHARLAIX**. *Chemical Society Reviews*, 2010, vol. 39 (3), 1073-1095
- **T. GODDENHENRICH** ; **S. MULLER** ; **C. HEIDEN**. *Review of Scientific Instruments*, 1994, vol. 65 (9), 2870-2873
- **A. D. L. HUMPHRIS** ; **B. ZHAO** ; **D. CATTO** ; **J. P. HOWARD-KNIGHT** ; **P. KOHLI** ; **J. K. HOBBS**. *Review of Scientific Instruments*, 2011, vol. 82 (4)
- **K. FRANKE**. *Ferroelectrics Letters Section*, 1995, vol. 19 (1-2), 35-43
- **A. LABUDA** ; **R. PROKSCH**. *Appl. Phys. Lett.*, 2015, vol. 106 (25), 253103
- **O. PAULL** ; **C. XU** ; **X. CHENG** ; **Y. ZHANG** ; **B. XU** ; **K. P. KELLEY** ; **A. DE MARCO** ; **R. K. VASUDEVAN** ; **L. BELLAICHE** ; **V. NAGARAJAN**. *Nature Materials*, 2021
- **L. FUMAGALLI** ; **G. FERRARI** ; **M. SAMPIETRO** ; **G. GOMILA**. *Appl. Phys. Lett.*, 2007, vol. 91 (24)
- **L. FUMAGALLI** ; **A. ESFANDIAR** ; **R. FABREGAS** ; **S. HU** ; **P. ARES** ; **A. JANARDANAN** ; **Q. YANG** ; **B. RADHA** ; **T. TANIGUCHI** ; **K. WATANABE**. *Science*, 2018, vol. 360 (6395), 1339
- **G. GRAMSE** ; **I. CASUSO** ; **J. TOSET** ; **L. FUMAGALLI** ; **G. GOMILA**. *Nanotechnology*, 2009, vol. 20 (39)
- **G. GRAMSE** ; **G. GOMILA** ; **L. FUMAGALLI**. *Nanotechnology*, 2012, vol. 23 (20)
- **D. C. HURLEY** ; **K. SHEN** ; **N. M. JENNETT** ; **J. A. TURNER**. *Journal of Applied Physics*, 2003, vol. 94 (4), 2347-2354
- **GERHARD MEYER** ; **NABIL M. AMER**. *Applied Physics Letters*, 1990, vol. 57 (20), 2089
- **M. HOUMMADY** ; **E. FARNAULT** ; **T. YAHIRO** ; **H. KAWAKATSU**. *Journal of Vacuum Science & Technology B*, 1997, vol. 15 (4), 1539
- **B. W. HOOGENBOOM** ; **PLTM FREDERIX** ; **D. FOTIADIS** ; **H. J. HUG** ; **A. ENGEL**. *Nanotechnology*, 2008, vol. 19 (38)
- **C. SCHONENBERGER** ; **S. F. ALVARADO**. *Review of Scientific Instruments*, 1989, vol. 60 (10), 3131
- **T. E. SCHAFFER** ; **P. K. HANSMA**. *Journal of Applied Physics*, 1998, vol. 84 (9), 4661
- **T. E. SCHAFFER** ; **H. FUCHS**. *Journal of Applied Physics*, 2005, vol. 97 (8)
- **T. FUKUMA** ; **M. KIMURA** ; **K. KOBAYASHI** ; **K. MATSUSHIGE** ; **H. YAMADA**. *Review of Scientific Instruments*, 2005, vol. 76 (5)
- **F. JOHANN** ; **T. JUNGK** ; **S. LISINSKI** ; **A. HOFFMANN** ; **L. RATKE** ; **E. SOERGEL**. *Applied Physics Letters*, 2009, vol. 95 (20)
- **R. NATH** ; **S. HONG** ; **J. A. KLUG** ; **A. IMRE** ; **M. J. BEDZYK** ; **R. S. KATIYAR** ; **O. AUCIELLO**. *Applied Physics Letters*, 2010, vol. 96 (16)
- **D. O. ALIKIN** ; **A. S. ABRAMOV** ; **M. S. KOSOBOKOV** ; **L. V. GIMADEEVA** ; **K. N. ROMANYUK** ; **V. SLABOV** ; **V. Y. SHUR** ; **A. L. KHOLKIN**. *Ferroelectrics*, 2020, vol. 559 (1), 15
- **D. O. ALIKIN** ; **L. V. GIMADEEVA** ; **A. V. ANKUDINOV** ; **Q. HU** ; **V. Y. SHUR** ; **A. L. KHOLKIN**. *Applied Surface Science*, 2021, vol. 543
- **S. V. KALININ** ; **E. A. ELISEEV** ; **A. N. MOROZOVSKA**. *Applied Physics Letters*, 2006, vol. 88 (23)
- **D. C. HURLEY** ; **K. SHEN** ; **N. M. JENNETT** ; **J. A. TURNER**. *Journal of Applied Physics*, 2003, vol. 94 (4), 2347
- **D. E. OATES** ; **S. H. PARK** ; **G. KOREN**. *Phys. Rev. Lett.*, 2004, vol. 93, 197001
- **HOFFMANN Á** ; **JUNGK T** ; **SOERGEL E**. Compensation of cross talk in the optical lever deflection method used in atomic force microscope. *Rev. Sci. Instrum.*, 2007, vol. 78, 016101
- **STOWE, T. D.** ; **YASUMURA, K** ; **KENNY, T. W** ; **BOTKIN, D** ; **WAGO, K** ; **RUGAR, D**. *Appl. Phys. Lett*, 1997, vol. 71, 288
- **MUNZ**. *J. Phys. D: Appl. Phys*, 2010, vol. 43, 063001
- **ASAY D B** ; **KIM S H**. *Rev. Sci. Instrum*, 2006, vol. 77, 043903
- *J. Phys. D*, 2010, vol. 43, 063001
- **A. HOFFMANN** ; **T. JUNGK** ; **E. SOERGEL**. Crosstalk correction in atomic force microscopy. *Review of Scientific Instruments*, 2007, vol. 78 (1)